# EUROPEAN PATENT APPLICATION

(11) **EP 2 299 416 A2**
(43) Date of publication of application: **23.03.2011**
(21) Application number: 10176920.6
(22) Date of filing: 15.09.2010
(51) Int. Cl.: G08B 13/196, G07G 3/00

(54) **Store surveillance system, warning device, control method for a store surveillance system, and a program**

(30) Priority: 16.09.2009 JP 2009214236; 16.09.2009 JP 2009214237; 16.09.2009 JP 2009214238
(71) Applicant: Seiko Epson Corporation, Tokyo 163 (JP)
(72) Inventor: Aonuma, Masashi, Nagano 392-8502 (JP); Nakamura, Jinichi, Nagano 392-8502 (JP); Hama, Takashi, Nagano 392-8502 (JP); Yoshizawa, Junichi, Nagano 392-8502 (JP)
(74) Representative: MERH-IP Matias Erny Reichl Hoffmann

(57) **Abstract**

A store surveillance system, a warning device, a store surveillance system control method, and a program enable easily detecting fraudulent activity in a retail store, supermarket, or other type of store. A store management server 5 has a pattern storage unit T that stores occurrence patterns of specific events that occur in a store; a POS terminal 1 that executes a product transaction process; a employee surveillance camera 3 that monitors component factors of the occurrence patterns; and a card reader 4. When the POS terminal 1 executes a predetermined exception process, the store management server 5 issues a warning conditionally upon whether event occurrence conditions detected by the employee surveillance camera 3 and card reader 4 match a fraudulence pattern stored as an occurrence pattern, or do not match a normal pattern stored as an occurrence pattern.

## Description

### BACKGROUND

### 1. Technical Field

The present invention relates to a store surveillance system that can detect fraudulent or improper activity in a store such as a retail store or supermarket, and to an alarm device, a control method for a store surveillance system, and a program.

### 2. Related Art

Systems designed to detect fraudulent activities by employees while processing transactions at POS terminals in stores such as retail stores and supermarkets are known from the literature. See, for example, Japanese Unexamined Patent Appl. Pub. JP-A-2005-115504.
The system taught in JP-A-2005-115504 includes a POS terminal, a camera focused on the POS terminal and immediate surroundings, a photojournal recorder, and a search terminal. A photojournal recorder records journal data (transaction history data), image data captured by the camera showing the POS terminal and surroundings, and a history of POS terminal operation by the employee (operating history data). By specifying specific search conditions such as the time and POS terminal operations using a search terminal, an administrator (operator) can retrieve and display both the journal data matching the search criteria and the image data linked to the found journal data.

This system, however, only displays a list of the content (transaction history) of the transaction process matching the search criteria specified by the administrator and the image captured at the time of that transaction, and in order to detect if there was any fraudulent or improper activity during that transaction process, the administrator must check each image individually. This means that the administrator must actively and independently initiate the search process, and cannot determine if there was any fraudulent or improper activity without inspecting the images returned as the search result. As a result, detecting fraudulent or improper activity requires significant time and effort.

### SUMMARY

A store surveillance system, warning device, control method for controlling a warning device for a store surveillance system, control method for a store surveillance system, and a program according to the present invention enable easily detecting fraudulent or improper activity in a store such as a retail store or supermarket.

A first aspect of the invention is a warning device for a store surveillance system including: a pattern storage unit that stores occurrence patterns of specific events that occur in a store; a factor surveillance unit that monitors component factors of the occurrence patterns; and a warning unit that, when the transaction process unit executes a predetermined exception process, issues a warning conditionally upon whether event occurrence conditions detected by the factor surveillance unit match a fraudulence pattern stored as an occurrence pattern stored in the pattern storage unit, or do not match a normal pattern stored as an occurrence pattern stored in the pattern storage unit.
Preferably, the warning device is comprised in the store surveillance system. Then, preferably, the store surveillance system comprises the warning device and a transaction process unit that executes a transaction process, in particular a product transaction process. Preferably, the store surveillance system includes: a pattern storage unit that stores occurrence patterns of specific events that occur in a store; a transaction process unit that executes a transaction process, in particular a product transaction process; a factor surveillance unit that monitors component factors of the occurrence patterns; and a warning unit that, when the transaction process unit executes a predetermined exception process, issues a warning conditionally upon whether event occurrence conditions detected by the factor surveillance unit match a fraudulence pattern stored as an occurrence pattern stored in the pattern storage unit, or do not match a normal pattern stored as an occurrence pattern stored in the pattern storage unit.

Another aspect of the invention is a control method for warning device for a store surveillance system that has a pattern storage unit that stores occurrence patterns of specific events that occur in a store, and identifies fraudulent activity in the store based on the occurrence patterns, the control method including as steps executed by a computer: a transaction process step that executes a transaction process, in particular a product transaction process; a factor surveillance step that monitors component factors of the occurrence patterns; and a warning step that, when the transaction process step executes a predetermined exception process, issues a warning conditionally upon whether event occurrence conditions detected in the factor surveillance step match a fraudulence pattern stored as an n occurrence pattern, or do not match a normal pattern stored as an occurrence pattern.
Preferably, there is provided a control method for a store surveillance system that has a pattern storage unit that stores occurrence patterns of specific events that occur in a store, and identifies fraudulent activity in the store based on the occurrence patterns, the control method including as steps executed by a computer: a transaction process step that executes a product transaction process; a factor surveillance step that monitors component factors of the occurrence patterns; and a warning step that, when the transaction process step executes a predetermined exception process, issues a warning conditionally upon whether event occurrence conditions detected in the factor surveillance step match a fraudulence pattern stored as an occurrence pattern, or do not match a normal pattern stored as an occurrence pattern

Further preferably in the store surveillance system and/or the warning device according to another aspect of the invention, the factor surveillance unit has at least one of an employee surveillance unit that monitors employee actions and/or behavior, a customer surveillance unit that monitors customer behavior during the transaction process, a transaction process device surveillance unit that monitors a status of a device used to execute the transaction process, in particular for monitoring a status of the transaction process unit of the store surveillance system, and an evaluation of evidence unit that determines the authenticity of a returned product or a receipt presented as evidence in the exception process.

Further preferably in a store surveillance system control method and/or a warning device control method according to another aspect of the invention, the factor surveillance step has at least one of an employee surveillance step that monitors employee actions and/or behavior, a customer surveillance step that monitors customer behavior during the transaction process, a transaction process device surveillance step that monitors a status of a device used to execute the transaction process, in particular that monitors a status of the transaction process unit of the store surveillance system, and an evaluation of evidence step that determines the authenticity of a returned product or a receipt presented as evidence in the exception process.

These aspects of the invention monitor the occurrence pattern of events occurring in a store (such as execution of a transaction process (including exception processes)), automatically determine from the surveillance results if there was any fraudulent activity in a particular situation, and can issue a warning when fraudulent activity is detected. As a result, fraudulent activity can be easily detected without an administrator needing to actively detect fraudulent activity as in the related art, and the time and effort required to detect and confirm fraudulent activity in a store can be reduced.
More particularly, fraudulent activity can be accurately detected by monitoring a combination of factors, such as the actions and behavior of employees (employee status), customer status, the status of devices used in transaction processes (such as the status of the POS terminal and peripheral devices), and the authenticity of receipts and products presented for return, according to particular events (event characteristics) in order to determine (monitor) the conditions under which events occur. In addition, in order to determine (monitor) the conditions under which events occur, fraudulent activity can be determined based only on customer attributes, and fraudulence can be determined based only on the status of the transaction process device, regardless of employee actions and behavior.

Further preferably in a store surveillance system and/or in a warning device according to another aspect of the invention, the exception process includes at least one of an interrupt process for canceling input data during the transaction process, a cancellation process for canceling the transaction process after the transaction process ends, a return process for returning a product, a mark-down process for reducing a product price, a discount process for discounting a product, a change-making process for making change, a payment/repayment process for recording a payment or accepting a repayment, and a re-issue process for re-issuing a receipt.

Further preferably in a store surveillance system control method and/or in a warning device control method according to another aspect of the invention, the exception process includes at least one of an interrupt process for canceling input data during the transaction process, a cancellation process for canceling the transaction process after the transaction process ends, a return process for returning a product, a mark-down process for reducing a product price, a discount process for discounting a product, a change-making process for making change, a payment/repayment process for recording a payment or accepting a repayment, and a re-issue process for re-issuing a receipt.

With these aspects of the invention, detecting improper activities can thus be done more efficiently by generally targeting any exception process that is highly susceptible to abuse as an opportunity for fraudulent or improper activity, that is, by targeting exception processes that can be easily used for fraudulent or improper activity.

Further preferably in a store surveillance system and/or in a warning device according to another aspect of the invention, the warning unit issues a warning based on whether or not the transaction amount in the exception process is greater than or equal to a predetermined specified amount.

Further preferably in a store surveillance system control method and/or in a warning device control method according to another aspect of the invention, the warning step issues a warning based on whether or not the transaction amount in the exception process is greater than or equal to a predetermined specified amount.

By thus using whether or not the transaction amount is greater than or equal to a specified amount as one parameter for determining fraudulent activity and determining whether to issue a warning, detection of fraudulent activity can be targeted more specifically. For example, by excluding exception processes in which the transaction amount is small (less than a specified amount) and targeting exception processes in which the transaction amount exceeds a specified amount, fraudulent activity can be detected more efficiently than when all exception processes are examined for fraudulent activity regardless of the transaction amount.

Further preferably in a store surveillance system and/or warning device according to another aspect of the invention, the warning unit issues a warning to a specific administrator as one warning method.

With this aspect of the invention, detection of fraudulent activity can be reliably reported regardless of where the administrator is, and the administrator can then respond quickly to the fraudulent activity.

Another aspect of the invention is a warning device as described above that can be used in the store surveillance system described above, and includes the pattern storage unit, the factor surveillance unit, and the warning unit. The factor surveillance unit preferably includes an imaging unit that records (e.g. image recording) customers during the transaction process of the transaction process unit, a captured image storage unit that stores a captured image output from the imaging unit, and a comparison unit that compares, when the transaction process unit executes a specific exception process and the imaging unit records the customer during the exception process, the captured image of the customer during the exception process with the captured image of the customer that purchased the target product of the exception process read from the captured image storage unit; and when the result of comparison by the comparison unit is that the customer in the exception process and the customer at the time of purchase are not the same person, the warning unit preferably determines the event occurrence conditions match a fraudulence pattern stored in the pattern storage unit and preferably issues a warning.

In a control method for a store surveillance system and/or a warning device according to another aspect of the invention, the factor surveillance step preferably includes an imaging step of recording (e.g. image recording) customers during the transaction process of the transaction process unit; and the computer also executes a captured image storage step that stores a captured image output from the imaging step, and a comparison step that compares, when the transaction process step executes a specific exception process and the customer is recorded during the exception process in the imaging step, the captured image of the customer during the exception process with the captured image of the customer that purchased the target product of the exception process and was stored in the captured image storage step; and when the result of comparison in the comparison step is that the customer in the exception process and the customer at the time of purchase are not the same person, the warning step preferably determines the event occurrence conditions match a fraudulence pattern stored in the pattern storage unit and preferably issues a warning.

By storing "the result of comparison by the comparison unit is that the customer in the exception process and the customer at the time of purchase are not the same person" as a fraudulence pattern in the pattern storage unit, a warning is issued when the customer of the exception process is not the same as the customer that purchased the product with which the exception process is concerned. As a result, whether the exception process was triggered by the correct buyer (the person that purchased the product in the store) can be easily determined. For example, when a customer attempts fraudulent activity such as fraudulently returning stolen goods or goods purchased for less at a different store, this can be detected and store losses caused by such fraudulent customer actions can be reduced.

Further preferably, the comparison unit compares the captured image of the customer based on at least one of a facial feature of the customer and a color feature of a customer's clothing.

Individual customers can thus be accurately identified by comparison based on a customer's facial feature. In addition, by comparison using a color feature, the data to be compared can be reduced before comparing facial features, and images can be compared efficiently even when there are many subject images to compare.

Further preferably in a warning device according to another aspect of the invention, the captured image storage unit stores information based on a captured image of the customer during the transaction process linked to receipt information of the receipt issued in the transaction process, and includes a receipt reading unit that reads the receipt information during the exception process, and an authentication unit that compares the read receipt information with the receipt information stored in the captured image storage unit, and determines the authenticity of the read receipt; and the comparison unit compares the captured customer images if the result of the authentication unit is that the read receipt is not a forged receipt.

This aspect of the invention determines the authenticity of the receipt used in an exception process, and compares the captured customer image when the receipt is not a forged receipt. This can prevent exception processes for products that are returned using a fraudulently obtain legitimate receipt (a receipt that is not a forgery).

In a warning device according to another aspect of the invention, authentication information for verifying authenticity is printed on the receipt; and the receipt information includes the authentication information.

This aspect of the invention prints authentication information on the receipt when a receipt is issued, and when verifying the authenticity of a receipt in the exception process, can determine if the receipt is a legitimate receipt or a forged receipt based on the authentication information (the presence of authentication information or comparing the content of the authentication information). As a result, forged receipts can be detected more reliably.
Note that hidden characters printed using invisible ink or a special print pattern can be used as authentication information.

A warning device according to another aspect of the invention can be used in the store surveillance system described above, and includes the pattern storage unit, the factor surveillance unit, and the warning unit as described above. The pattern storage unit preferably stores fraudulent behavior patterns describing employee behaviors that are considered to be fraudulent activity by an employee around a checkout counter as the fraudulence patterns; the factor surveillance unit preferably includes a behavior detection unit that detects employee behavior around the checkout counter; and the warning unit preferably issues a warning when employee behavior detected by the behavior detection unit is determined to match a fraudulent behavior pattern stored in the pattern storage unit.

In a control method for a store surveillance system and/or a warning device according to another aspect of the invention, the pattern storage unit preferably stores fraudulent behavior patterns describing employee behaviors that are considered to be fraudulent activity by an employee around a checkout counter as the fraudulence patterns; the factor surveillance step preferably includes a behavior detection step that detects employee behavior around the checkout counter; and the warning step preferably issues a warning when employee behavior detected in the behavior detection step is determined to match a fraudulent behavior pattern stored in the pattern storage unit.

When employee behavior is determined to be unnatural based on the results of surveilling employee behavior around the checkout counter, this aspect of the invention can determine and report there was fraudulent activity by the employee (a suspicion of fraudulent activity). As a result, fraudulent activity can be easily detected without an administrator actively detecting fraudulent activity as in the related art, and the time and effort needed to detect and confirm fraudulent activity by employees can be reduced.

Further preferably, a warning device according to another aspect of the invention preferably also has a transaction information acquisition unit that acquires transaction information, which is the result of a transaction process of a transaction process unit disposed at the checkout counter; and the warning unit issues a warning when specific information denoting an exception process of the transaction process is contained in the transaction information, and the employee behavior during the exception process detected by the behavior detection unit is determined to match a fraudulent behavior pattern.

With this aspect of the invention, by monitoring employee behavior during exception processes (particularly employee behavior around the checkout counter before and after an exception process), fraudulent activity by an employee can be detected when surveillance indicates the employee behavior is unnatural. More specifically, by monitoring employee behavior triggered by processes that have a strong possibility of being used for fraudulent activity, such as exception processes, fraudulent activity can be detected efficiently.

In a warning device according to another aspect of the invention, the behavior detection unit detects employee behavior from captured images of employees taken around the checkout counter.

By using captured images of employees for behavior detection, this aspect of the invention can detect small employee movements and detect unnatural behavior more accurately. For example, by detecting change in the position of the employee's head per unit time from the captured images, sudden or quick changes in the position of the head (such as looking around frequently) can be interpreted as agitated behavior, that is, that there is a strong possibility of fraudulent activity.

In a warning device according to another aspect of the invention, the employee carries an IC card to which an ID identifying the employee is assigned; and the behavior detection unit detects employee behavior based on reading the IC card.

This aspect of the invention can easily detect unnatural behavior by determining the location of the employee, such as moving back and forth to the checkout counter (repeatedly going into the cash register) by reading the IC card.

Another aspect of the invention is a computer program product comprising computer program product means that causes a computer to execute the steps of the store surveillance system control method described above.

With this aspect of the invention a program that can easily detect and warn of fraudulent activity in a store (such as fraudulent activity involving a transaction process (during an exception process)) can be provided.
Another aspect of the invention is a store surveillance system comprising a warning device according to one or more of the above-described aspects and a transaction process unit that executes one or more transaction processes, in particular at least a product transaction process.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 shows an exemplary block diagram showing the configuration of a store surveillance system according to the first embodiment of the invention.
FIG. 2 shows an exemplary control block diagram of the store surveillance system according to the first embodiment of the invention.
FIG. 3 shows an exemplary function block diagram of the store surveillance system according to the first embodiment of the invention.
FIG. 4 shows an exemplary fraudulence pattern table in the first embodiment of the invention.
FIG. 5 shows an exemplary flow chart describing the process of detecting fraudulent or improper activity from employee behavior in the store surveillance system according to the first embodiment of the invention.
FIG. 6 shows an exemplary block diagram showing the configuration of a store surveillance system according to a second embodiment of the invention.
FIG. 7 shows an exemplary control block diagram of the store surveillance system according to the second embodiment of the invention.
FIG. 8 shows an exemplary function block diagram of the store surveillance system according to the second embodiment of the invention.
FIG. 9 shows an exemplary fraudulence pattern table according to the second embodiment of the invention.
FIG. 10 shows an exemplary flow chart describing the process of detecting fraudulent or improper activity triggered by an employee entering a changing room in the store surveillance system according to the second embodiment of the invention.
FIG. 11 shows an exemplary flow chart describing the process of detecting fraudulent or improper activity triggered by an employee lingering at a display of high-price products in the store surveillance system according to the second embodiment of the invention.
FIG. 12 shows an exemplary flow chart describing the process of detecting fraudulent or improper activity triggered by an employee entering a checkout counter in the store surveillance system according to the second embodiment of the invention.
FIG. 13 shows an exemplary block diagram showing the configuration of a store surveillance system according to a third embodiment of the invention.
FIG. 14 shows an exemplary control block diagram of the store surveillance system according to the third embodiment of the invention.
FIG. 15 shows an exemplary function block diagram of the store surveillance system according to the third embodiment of the invention.
FIG. 16 shows an exemplary fraudulence pattern table according to the third embodiment of the invention.
FIG. 17 shows an exemplary flow chart describing a process of detecting fraudulent or improper activity in the store surveillance system according to the third embodiment of the invention by determining if a person returning goods and the same person that purchased the goods are the same.
FIG. 18 shows an exemplary flow chart describing a process of detecting fraudulent or improper activity in the store surveillance system according to the third embodiment of the invention by determining the authenticity of the receipt used to return goods.

### DESCRIPTION OF EMBODIMENTS

Preferred embodiments of a store surveillance system according to the invention are described below with reference to the accompanying figures.

### * Embodiment 1

The first embodiment of the invention describes a store surveillance system that can detect fraudulent or improper activity (also referred to as simply "fraudulent activity" below) by employees of the store by monitoring employee behavior (activity).

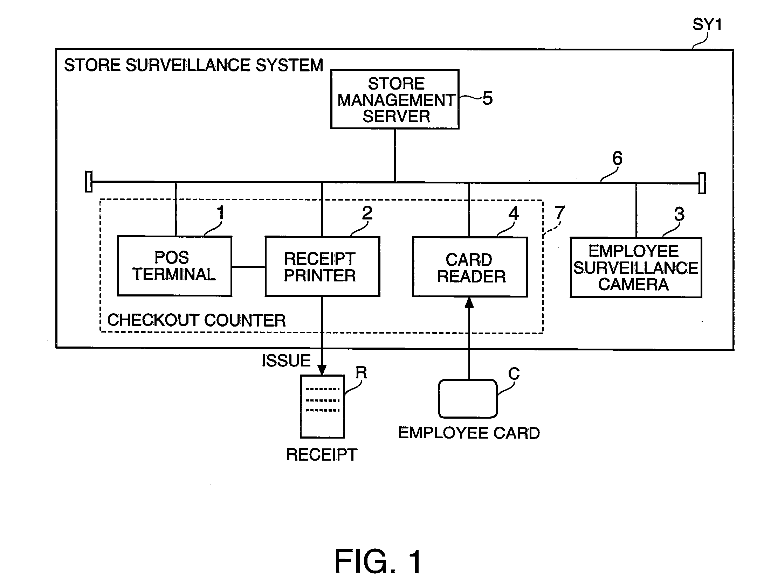

FIG. 1 shows the configuration of a store surveillance system SY1 according to a first embodiment of the invention.
As shown in the FIG.1, the store surveillance system SY1 includes a POS terminal 1 that processes sale transactions, a receipt printer 2 that prints receipts R, an employee surveillance camera 3 (factor surveillance unit, employee surveillance unit, behavior detection unit) that images employees (in particular employees that are operating the POS terminal 1, i.e. as an operator of the POS terminal 1), a card reader 4 (factor surveillance unit, employee surveillance unit, behavior detection unit) that reads employee cards C (IC cards) that can be carried by each employee, an employee card identifying the employee, and a store management server 5 that detects employee activities such as e.g. improper employee activities. The POS terminal 1 and receipt printer 2 are communicably connected through a serial interface (such as e.g. a USB (Universal Serial Bus) interface). The system components are also connected to communicate with each other through an in-store LAN 6 (e.g. via a wired cable connection or a wireless connection).

Note that this first embodiment of the invention is described as having one POS terminal 1, but may also be configured with a plurality of POS terminals 1. In such a configuration a receipt printer 2, employee surveillance camera 3, and card reader 4 are connected to one or more of the POS terminals 1, preferable even to each POS terminal 1.

According to the embodiment, the POS terminal 1 is a cash register located at a checkout counter 7, and executes a transaction process (including an exception process) based on product-related information input by an employee (operator). The POS terminal 1 also sends the transaction information that is the result of the transaction process (that is, the receipt data and data to be presented on the customer display as the result of exception processes and normal transaction processes other than the exception process; referred to below as the "exception process information" and "normal transaction information") to the receipt printer 2.

The employee surveillance camera 3 is installed above (or beside) the checkout counter 7 and is configured to record the employee (and the area around the employee) operating the cash register at the checkout counter 7. The employee image data (including the date and time the image was taken) captured by the employee surveillance camera 3 is linked to the camera ID identifying the specific employee surveillance camera 3 and (collectively referred to below as the "employee image information") sent as employee image information through the receipt printer 2 to the store management server 5. Note that the location of the employee surveillance camera 3 is not limited to above or beside the checkout counter 7 as described above. The employee surveillance camera 3 may, for example, be located near the POS terminal 1.

The employee card C is a card with an RFID tag, and is assigned an employee ID that uniquely identifies a particular employee. The card reader 4 is a so-called RFID reader/writer, and is located at the checkout counter 7 (near the POS terminal 1). This card reader 4 contactlessly reads the employee card C carried by each employee. The location of a particular employee is obtained by acquiring the employee ID stored in the employee card C. The acquired employee ID is linked to the date and time the employee ID was acquired and a device ID uniquely identifying a particular card reader 4 as "employee position information" and sent through the receipt printer 2 to the store management server 5.

The receipt printer 2 issues (prints) receipts R based on the transaction information received from the POS terminal 1. In addition to issuing receipts R, the receipt printer 2 also has a function for sending transaction information received from the POS terminal 1 to the store management server 5, and a function for sending (a function for relaying) employee image information received from the employee surveillance camera 3 and employee position information received from the card reader 4 to the store management server 5. By thus filtering information and sending only the necessary information through the receipt printer 2 to the store management server 5, there is little effect on traffic on the POS backbone network. Changing the POS backbone network itself is also not necessary.

The store management server 5 can detect specific activities such as improper activities by employees. More particularly, when an exception process is invoked, the store management server 5 detects whether the employee did something improper (or whether there is a suspicion of improper activity) from the behavior (actions) of an employee near the checkout counter 7 where the exception process was invoked (before and after the exception process started), and issues an appropriate alarm if improper activity is detected. Detection of such employee behavior is based on the result of analyzing the employee image data captured by the foregoing employee surveillance camera 3, and the result of the card reader 4 reading the employee card C.

By thus using captured image data (employee image data) for employee behavior detection, small employee movements can be detected and the accuracy of unnatural behavior detection can be improved. In addition, by using the data read from the employee card C for employee behavior detection, the location of the employee can be easily determined and unnatural behavior can be easily detected.

Exception processes used as factors for detecting improper activity in this first embodiment of the invention include interrupt processes that cancel input data in during a transaction process, cancellation processes that cancel a transaction process after the transaction is completed, return processes for returning goods, mark-down processes for discounting a product, discount processes for discounting a product, change processes for making change, payment and repayment processes for recording disbursements and cash repayments, and re-issue processes for re-issuing a receipt. Detecting improper activities can thus be done more efficiently by generally targeting any exception process that is highly susceptible to abuse as an opportunity for fraudulent or improper activity, that is, by targeting exception processes that can be easily used for fraudulent or improper activity.

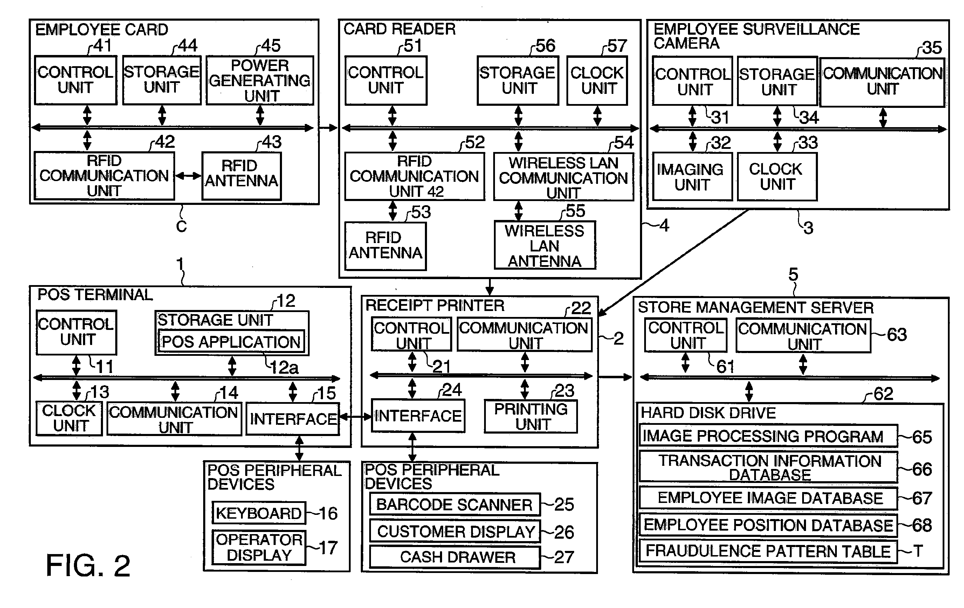

The control configuration of different parts of the store surveillance system SY1 is described next with reference to the control block diagram of the store surveillance system SY1 in FIG. 2.

The POS terminal 1 includes a storage unit 12, a clock unit 13, a communication unit 14, an interface 15, and a control unit 11 that is connected to these other parts and controls the POS terminal 1, and is connected to POS peripheral devices through the interface 15. A keyboard 16 and operator display 17 are connected as POS peripheral devices. A receipt printer 2 is also connected through the interface 15.

The control unit 11 includes a CPU (central processing unit), ROM (read-only memory) that stores control data and a control program enabling the CPU to execute various processes, and RAM (random access memory) that is used as working area when the CPU executes a process, and centrally controls the POS terminal 1. An identifier (POS terminal number) assigned uniquely to the POS terminal 1 is stored in ROM.

The storage unit 12 stores a POS application 12a. The POS application 12a is a program for executing a transaction process, and includes a peripheral device control program for controlling the keyboard 16 and operator display 17, for example.
The clock unit 13 keeps the current date and time. In this embodiment of the invention the clock unit 13 is used to get the date and time when the transaction process is executed.
The communication unit 14 communicates through the LAN 6 with a POS server (not shown in the figure).

The control unit 11 gets product information about the purchased products from the POS server based on information input through the keyboard 16 and barcode information from a barcode scanner 25 described below. The control unit 11 generates transaction information based on the product information acquired in conjunction with the POS application 12a, and sends the transaction information to the receipt printer 2. Note that the transaction process unit is rendered primarily by the control unit 11 and POS application 12a.

The receipt printer 2 includes a communication unit 22, a printing unit 23, an interface 24, and a control unit 21 that is connected to these other units and controls the receipt printer 2. POS peripheral devices including a barcode scanner 25, customer display 26, and cash drawer 27 are also connected through the interface 24. The receipt printer 2 is also connected to the POS terminal 1 through the interface 24.

The control unit 21 includes a CPU (central processing unit), ROM (read-only memory) that stores control data and control programs (including a peripheral device control program for controlling the barcode scanner 25, customer display 26, and cash drawer 27) enabling the CPU to execute various processes, and RAM that is used as working area when the CPU executes a process, and centrally controls the receipt printer 2.

The communication unit 22 enables communication between the employee surveillance camera 3, card reader 4, and store management server 5 connected over the in-house LAN 6.
The control unit 21 controls the communication unit 22 to send transaction information received from the POS terminal 1 through the interface 24 to the store management server 5. The control unit 21 also receives employee image information from the employee surveillance camera 3, and sends this employee image information to the store management server 5. The control unit 21 also receives employee image information from the employee surveillance camera 3 and sends the employee image information to the store management server 5. The control unit 21 also receives employee position information from the card reader 4, and sends the employee position information to the store management server 5.
The printing unit 23 prints the print information generated based on the transaction information on receipt paper.

The employee surveillance camera 3 includes an imaging unit 32, a clock unit 33, a storage unit 34, a communication unit 35, and a control unit 31 that is connected to these units and controls the employee surveillance camera 3.

The imaging unit 32 records images of the employee (including the area around the employee) at the checkout counter 7.
The clock unit 33 keeps the current date and time. In this first embodiment of the invention the clock unit 33 is used to get the date and time the employee image data is captured.
The storage unit 34 stores a camera ID identifying the employee surveillance camera 3.
The communication unit 35 communicates with the receipt printer 2 connected to the in-house LAN 6.
The control unit 31 controls the communication unit 35 to send the employee image information including the captured employee image data (including the capture date and time) and the camera ID to the receipt printer 2.

The employee card C has an RFID communication unit 42, an RFID antenna 43, a storage unit 44, a power generating unit 45, and a control unit 41 that is connected to these other units and controls the employee card C.
The RFID communication unit 42 communicates wirelessly (short-range wireless communication) with the card reader 4 through the RFID antenna 43. When sending and receiving signals (data) with the card reader 4, the RFID communication unit 42 executes the processes of modulating and demodulating the signals.

The storage unit 44 stores an employee ID identifying the employee card C.
The power generating unit 45 produces power for driving other parts of the card, and generates electromotive force using a power supply signal (carrier wave) received from the card reader 4 through the RFID antenna 43. As a result of the control unit 41 controlling these other parts, the employee card C communicates with the card reader 4 and reads the employee ID from the card reader 4 as a result.

The card reader 4 includes an RFID communication unit 52, an RFID antenna 53, a wireless LAN communication unit 54, a wireless LAN antenna 55, a storage unit 56, a clock unit 57, and a control unit 51 that is connected to these other parts and controls the card reader 4.

The RFID communication unit 52 communicates wirelessly (short-range wireless communication) with the employee card C through the RFID antenna 53. When sending and receiving signals (data) with the employee card C, the RFID communication unit 52 executes the processes of modulating and demodulating the signals.
The clock unit 57 keeps the current date and time. In this embodiment of the invention the clock unit 57 is used to get the date and time the employee ID was acquired.
The storage unit 56 stores a device ID identifying the card reader 4.

The wireless LAN communication unit 54 communicates through the wireless LAN antenna 55 with the receipt printer 2 connected to the in-house LAN 6 (more specifically, it may communicate with the receipt printer 2 connected to the in-house LAN 6 through a wireless LAN router not shown, for example).
The control unit 51 controls the RFID communication unit 52, acquires the employee ID from the employee card C, and controls the wireless LAN communication unit 54 to send employee position information including the acquired employee ID, employee ID acquisition date and time, and device ID to the receipt printer 2.

The store management server 5 includes a control unit 61, a hard disk drive 62, a communication unit 63, and other hardware components generally found in a personal computer.
The control unit 61 includes a CPU (central processing unit), ROM that stores control data and a control program enabling the CPU to execute various processes, and RAM that is used as working area when the CPU executes a process, and centrally controls the store management server 5.

The communication unit 63 communicates with the receipt printer 2 connected to the in-house LAN 6.
The control unit 61 controls the communication unit 63 and receives transaction information (normal process information and exception process information), employee image information and employee position information from the receipt printer 2.

The hard disk drive 62 stores an image processing program 65, a transaction information database 66, an employee image database 67, an employee position database 68, and a fraudulence pattern table T (pattern storage unit). The image processing program 65 analyzes employee actions (behavior) by analyzing the employee image data.

The transaction information database 66 stores transaction information received from the receipt printer 2. This transaction information includes multiple items including a transaction process number, POS terminal number, transaction process date and time, transaction process type, employee ID, and sale information.
The transaction process number is a sequential number assigned to each single transaction unit.
The POS terminal number is information identifying the POS terminal 1 that executed the transaction process.
The transaction process date and time is information identifying the date and time the transaction process was executed.
The transaction process type is information identifying the type of transaction process that was executed, such as whether the process was a normal transaction process (a process other an exception process), an interrupt process, a cancellation process, a product return process, a mark-down process, a discount process, a change process, payment/repayment process, or a re-issue process, for example. The employee ID is information identifying the employee that executed the transaction process (operated the cash register). The employee ID is input by the employee to operate the POS terminal 1. The sale information includes such information as the product codes of the sold products, the number of each item purchased, the cost of each product, and the total sale amount of all purchased goods.

The employee image database 67 stores the employee image information (camera ID and employee image data (image time)).
The employee position database 68 stores the employee position information (employee ID, employee ID acquisition time, and device ID).
The fraudulence pattern table T stores a plurality of fraudulence patterns (described in detail below) combining different factors for determining fraudulent or improper activity, including the behavior (activity) of an employee suspected of fraudulent activity when an exception process is invoked, customer behavior, in-store conditions, and product sale conditions.

When an exception process is invoked in this configuration, the control unit 61 detects the behavior of the employee before and after the exception process based on the result of image analysis of the employee image data before and after the exception process stored in the employee image database 67, and the result of analyzing the employee location information stored in the employee position database 68.
If the detected employee behavior, customer behavior, in-store conditions, and product sale conditions match a fraudulence pattern stored in the fraudulence pattern table T, the control unit 61 determines there was improper activity by the employee. When improper employee activity is detected, the control unit 61 issues a warning that fraudulent or improper activity was detected (more particularly, that there is a suspicion of fraudulent or improper activity).

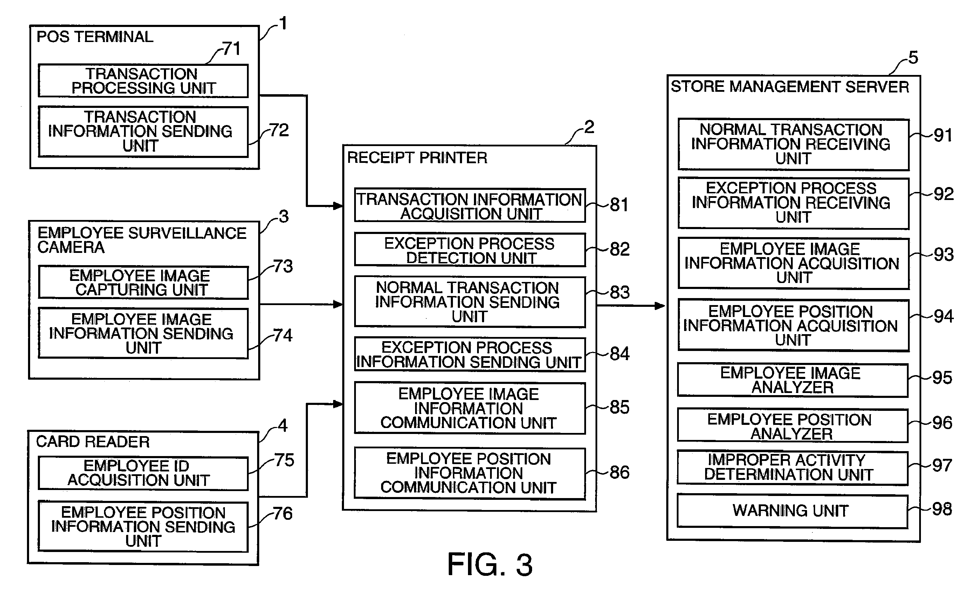

The functions of particular elements of the store surveillance system SY1 are described next with reference to the control block diagram in FIG. 3.

The POS terminal 1 includes a transaction processing unit 71 and transaction information sending unit 72. The transaction processing unit 71 executes a transaction process based on product-related information input by an employee, and outputs transaction information as the result of this process.
The transaction information sending unit 72 sends the transaction information output by the transaction processing unit 71 to the receipt printer 2.

The employee surveillance camera 3 has an employee image capturing unit 73 and an employee image information sending unit 74. The employee image capturing unit 73 takes a picture of the employee at the checkout counter 7. The employee image information sending unit 74 sends the employee image data (time taken) captured by the employee image capturing unit 73 and the camera ID of the employee surveillance camera 3 as the employee image information to the receipt printer 2.

The card reader 4 has an employee ID acquisition unit 75 and an employee position information sending unit 76.
The employee ID acquisition unit 75 reads the employee card C and acquires the employee ID. The employee position information sending unit 76 sends the employee ID acquired by the employee ID acquisition unit 75, the acquisition date and time when the employee ID was acquired, and the device ID as the employee position information to the receipt printer 2.

The receipt printer 2 has a transaction information acquisition unit 81, an exception process detection unit 82, a normal transaction information sending unit 83, an exception process information sending unit 84, an employee image information communication unit 85, and an employee position information communication unit 86.

The transaction information acquisition unit 81 acquires (receives) transaction information from the transaction information sending unit 72.
The exception process detection unit 82 detects information denoting an exception process from the transaction information acquired by the transaction information acquisition unit 81.
The normal transaction information sending unit 83 sends transaction information in which information indicating an exception process was not detected by the exception process detection unit 82, that is, the transaction information (normal process information) generated by the normal transaction process, to the store management server 5.
The exception process information sending unit 84 sends transaction information (exception process information) in which information denoting an exception process was detected by the exception process detection unit 82 to the store management server 5.
Note that the normal transaction information sending unit 83 and exception process information sending unit 84 can be rendered as a single unit.

The employee image information communication unit 85 receives and sends employee image information from the employee image information sending unit 74 to the store management server 5.
The employee position information communication unit 86 receives and sends employee position information from the employee position information sending unit 76 to the store management server 5.

The store management server 5 has a normal transaction information receiving unit 91, an exception process information receiving unit 92, an employee image information acquisition unit 93, an employee position information acquisition unit 94, an employee image analyzer 95, an employee position analyzer 96, a improper activity determination unit 97, and a warning unit 98.

The normal transaction information receiving unit 91 receives and stores normal process information from the normal transaction information sending unit 83 in the transaction information data base 66.
The exception process information receiving unit 92 receives and stores exception process information from the exception process information sending unit 84 in the transaction information data base 66.
Note that the normal transaction information receiving unit 91 and the exception process information receiving unit 92 are rendered as two separate units in this embodiment but can be rendered also as a single unit.
The employee image information acquisition unit 93 receives and stores employee image information from the employee image information communication unit 85 in the employee image data base 67.
The employee position information acquisition unit 94 receives and stores employee position information from the employee position information communication unit 86 in the employee position data base 68.

The employee image analyzer 95 acquires the employee image data to be analyzed from the employee image database 67, and detects employee activity (behavior) by analyzing the acquired employee image data. More specifically, the employee image analyzer 95 acquires employee image data within a defined time frame before and after a particular reference time (such as when the exception process was started), detects the range of activity by determining the difference between frames of a unit time in the acquired employee image data, and detects faces in this range of activity (checks if there are any parts corresponding to facial features). Parts where face detection succeeds are determined to be people. This operation then repeats to determine the lines of body movement and change in the position of the head. This enables detecting employee movement, and when, for example, there is extreme change in the position of the head (such as when repeatedly looking at one's surroundings), enables determining that the employee is nervous and the likelihood of engaging in a fraudulent or improper activity is high.

The employee position analyzer 96 detects employee activity (behavior) by referencing the employee position database 68, and determining how many times the suspect employee ID was detected within a specific time before and after a certain reference time (such as the start of the exception process). This enables easily detecting unnatural behavior such as repeatedly going to and from the vicinity of the checkout counter 7.

The improper activity determination unit 97 determines if there was fraudulent or improper activity by comparing the exception process information (type of exception process) acquired from the exception process information receiving unit 92, the result of the employee image analyzer 95 analyzing the employee image data before and after the exception process was invoked, the result of the employee position analyzer 96 analyzing the employee position before and after the exception process, and the fraudulence pattern table T. If this comparison finds a match with a fraudulence pattern stored in the fraudulence pattern table T, the improper activity determination unit 97 determines there was fraudulent or improper activity.

The warning unit 98 issues a warning when fraudulent or improper activity is detected by the improper activity determination unit 97. This warning can be issued by, for example, sending a message to a portable terminal carried by an administrator (such as the store manager), or displaying the warning on a display (not shown in the figure) of the store management server 5. The former method can reliably report detection of fraudulent or improper activity regardless of where the administrator is, and the administrator can then respond quickly to the improper activity. In the latter case, the warning unit is rendered primarily by the control unit 61 and communication unit 63.

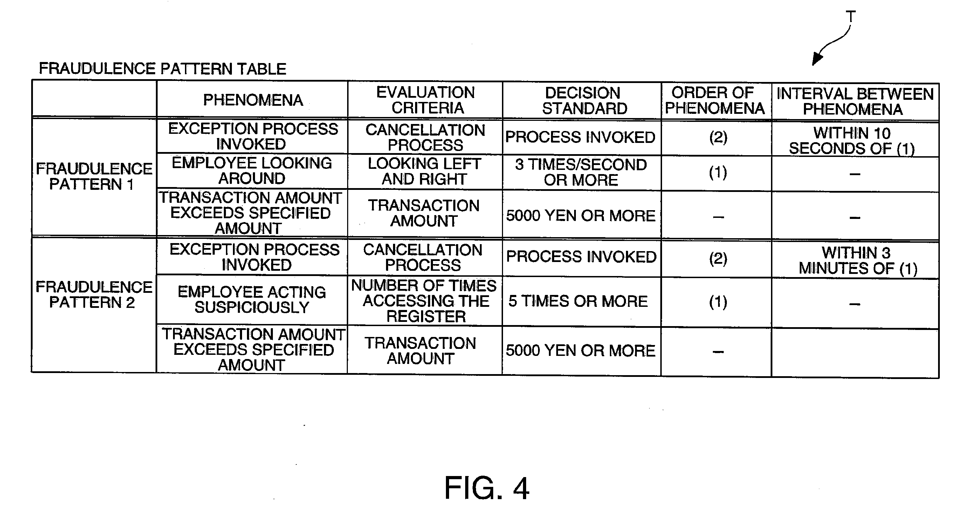

The configuration of the fraudulence pattern table T is described next with reference to FIG. 4. Note that this fraudulence pattern table T is described using as an example fraudulence patterns 1 and 2 for detecting improper activity when a cancellation process executes. As shown in FIG. 4, the fraudulence pattern table T contains various factors for determining if there was any fraudulent or improper activity.
The "phenomena" describes actions that must be checked to detect fraudulent or improper activity.
The "evaluation criteria" describe the criteria to be used to evaluate a particular phenomenon.
The "decision standard" describes the standard for identifying fraudulent or improper activity.
The "order of phenomena" identifies the order in which the phenomenon occur.
The "interval between phenomena" denotes the time limit for evaluating a certain phenomenon.

For example, fraudulence pattern 1 is a pattern for determining fraudulent or improper activity occurred (more specifically that there is a suspicion of fraudulent or improper activity) when the employee is detected to have moved her head left and right 3 or more times within 1 second while near the checkout counter 7 (near the POS terminal 1) within 10 seconds before a cancellation process is invoked, and the amount cancelled in the cancellation process is 5000 yen or more.
Fraudulence pattern 2 is a pattern for determining fraudulent or improper activity occurred (more specifically that there is a suspicion of fraudulent or improper activity) when the employee is detected to have moved to and from the checkout counter 7 (near the POS terminal 1) 5 or more times within 3 minutes before a cancellation process is invoked, and the amount cancelled in the cancellation process is 5000 yen or more.
These fraudulence patterns 1 and 2 enable detecting such fraudulent activity as an employee using a receipt R that was not taken by the customer to cancel the transaction after confirming that no one else is around the checkout counter 7 (near the POS terminal 1) and pocket an amount equal to the cancelled amount (sale amount).

Note that fraudulence patterns 1 and 2 shown in FIG. 4 are examples only, and the invention is not limited thereto. For example, fraudulence patterns that anticipate other types of employee behavior (such as hand movements or up and down movement of the body) can also be created, and fraudulence patterns that anticipate customer behavior (such as whether or not a customer is in front of the checkout counter 7 or customer actions) and conditions in the store when an exception process is invoked, or that consider the status of the transaction processing device (such as the status of the POS terminal 1 or POS peripheral devices (such as the read status of the barcode scanner 25 or whether the cash drawer 27 is open or closed)) can be created.
Note that monitoring the status of the transaction process device is done using the POS terminal I 1 and the receipt printer 2. More specifically, the transaction process device surveillance unit is rendered primarily by the POS terminal 1 (control unit 11) and the receipt printer 2 (control unit 21).

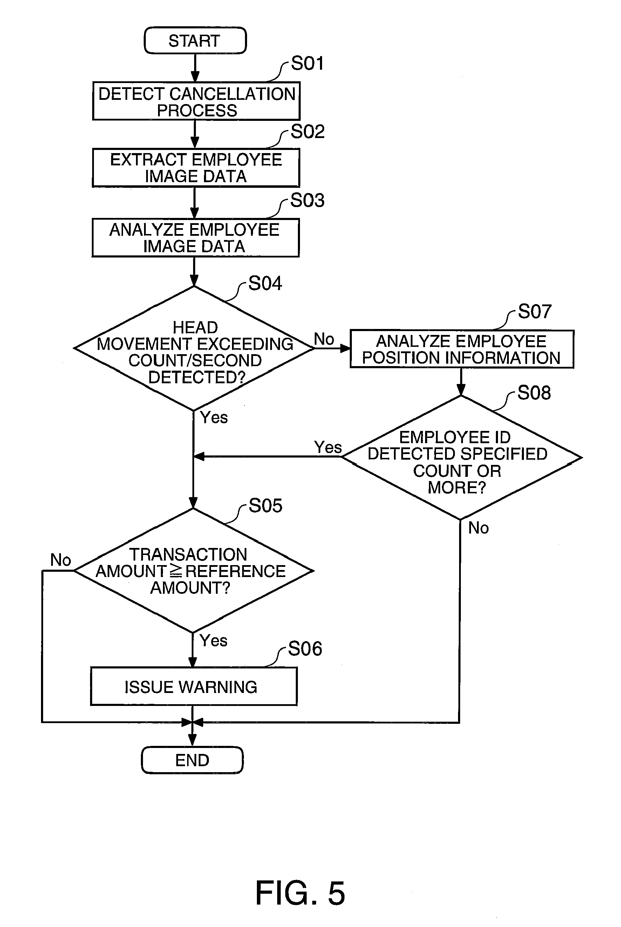

The process whereby the store management server 5 detects fraudulent or improper activity is described next with reference to the flow chart in FIG. 5. Note that this example describes detecting fraudulent activity from employee behavior when a cancellation process is executed as the exception process.
First, when the store management server 5 (control unit 61) detects a cancellation process was invoked (S01), it extracts employee image data for a predetermined time referenced to when the cancellation process was invoked (such as 10 seconds before the cancellation process) from the employee image database 67 (S02). The store management server 5 then analyzes the extracted employee image data (S03).

If as a result of image analysis the employee's face (head) is detected to have moved side to side a predetermined number of times per second (such as 3 times per second or more) (S04 returns Yes), whether the cancelled amount of the cancellation process is greater than or equal to a predetermined reference amount (such as 5000 yen or more) is determined.

If the cancelled amount is determined to equal or exceed the reference amount (cancelled amount ≥ reference amount, S05 returns Yes), the store management server 5 determines that the employee did something fraudulent (there is a suspicion of fraudulent activity) (determines a match with fraudulence pattern 1 in FIG. 4), and issues a warning (such as a message that "a fraudulent cancellation process is suspected") to the administrator (S06).
However, if the cancelled amount is determined to be less than the reference amount (cancelled amount < reference amount, S05 returns No), the store management server 5 determines there is no need for a warning and ends the process.

If as a result of image analysis in S03 the employee's face (head) is not detected to have moved side to side the predetermined number of times per second (S04 returns No), the store management server 5 analyzes the employee position information during a predetermined time (such as 3 minutes before the cancellation process) referenced to the start of the cancellation process (S07).

If as a result of analysis the employee ID of the employee that executed the cancellation process is not detected the predetermined number of times (such as 5 times or more) (S08 returns No), the store management server 5 determines there is no need for a warning and ends the process.

If as a result of analysis the employee ID of the employee that executed the cancellation process is detected the predetermined number of times or more (S08 returns Yes), the store management server 5 determines if the amount cancelled in the cancellation process is greater than or equal to the predetermined reference amount.
If the cancelled amount is determined to equal or exceed the reference amount (cancelled amount ≥ reference amount, S05 returns Yes), the store management server 5 determines that the employee did something fraudulent (there is a suspicion of fraudulent activity) (determines a match with fraudulence pattern 2 in FIG. 4), and issues a warning (such as a message that "a fraudulent cancellation process is suspected") to the administrator (S06).
However, if the cancelled amount is determined to be less than the reference amount (cancelled amount < reference amount, S05 returns No), the store management server 5 determines there is no need for a warning and ends the process.

Note that while the foregoing process determines whether or not to issue a warning based on the cancelled amount, but the invention is not so limited. For example, the decision step could keep a cumulative total of fraudulence value (information denoting a degree of fraud), and issue a warning when the total amount equals or exceeds a predetermined amount. The warning content and warning method may also be changed according to the accumulated total fraudulence value.

As described above, when employee behavior is determined to be unnatural based on the results of surveilling employee behavior around the checkout counter 7, this first embodiment of the invention can determine and report there was fraudulent activity by the employee (a suspicion of fraudulent activity). As a result, fraudulent activity can be easily detected without an administrator actively detecting fraudulent activity as in the related art, and the time and effort needed to detect and confirm fraudulent activity by employees can be reduced.

More specifically, by monitoring employee behavior (such as the behavior of employees near the checkout counter 7 before and after an exception process) triggered by processes that have a strong possibility of being used for fraudulent activity, such as exception processes, and determining if the employee engaged in fraudulent behavior (there is a suspicion of fraudulent activity) based on the monitored results, fraudulent activity can be detected efficiently.

Furthermore, because fraudulent activity is determined and whether to issue a warning is determined by using whether or not the transaction amount involved in an exception process is greater than or equal to a reference amount (specified amount) as a parameter, detection of fraudulent activity can be precisely targeted. In addition, by omitting exception processes involving small transaction amounts (less than the reference amount) from consideration, and targeting only exception processes involving large transaction amounts (equal to or greater than the reference amount), fraudulent activity can be detected more efficiently than when detecting fraudulent activity from all exception processes regardless of the transaction amount.

In this first embodiment of the invention fraudulence patterns are stored in fraudulence pattern table T, and fraudulent activity is determined to have occurred when the detected behavior matches one of these patterns, but the invention is not so limited. For example, normal patterns may be stored in the fraudulence pattern table T, and behavior that does not match the normal patterns may be mind to be fraudulent.

Furthermore, the barcode scanner 25, customer display 26, and cash drawer 27 are connected to the receipt printer 2 in the first embodiment of the invention, but the invention is not so limited and a configuration in which they are connected to the POS terminal 1 is also conceivable.

Yet further, the POS terminal 1 communicates with the POS server (not shown in the figure) through the in-house LAN 6, but a configuration having an in-house LAN 6 independent of the POS backbone network with the POS terminal 1 not connected to the in-house LAN 6 is also conceivable.

Yet further, employee image information from the employee surveillance camera 3 and employee position information from the card reader 4 are sent through the receipt printer 2 to the store management server 5, but the invention is not so limited and a configuration in which this information is sent directly from the employee surveillance camera 3 and card reader 4 to the store management server 5 is also conceivable.

Yet further, a configuration in which the various units rendered by the receipt printer 2 (including the transaction information acquisition unit 81, exception process detection unit 82, normal transaction information sending unit 83, exception process information sending unit 84, employee image information communication unit 85, and employee position information communication unit 86) are rendered by the POS terminal 1 is also conceivable.

Furthermore, a configuration in which selected units rendered by the store management server 5 (including the employee image analyzer 95, employee position analyzer 96, and improper activity determination unit 97) are rendered by the receipt printer 2 is also conceivable. Yet further, a configuration in which the units rendered by the store management server 5 are rendered by the POS system and a WWW server is also conceivable.

Yet further, a warning may be issued when employee behavior is determined to match a fraudulence pattern during normal transaction processes and non-transaction processes, and is not limited to exception processes.

### * Embodiment 2

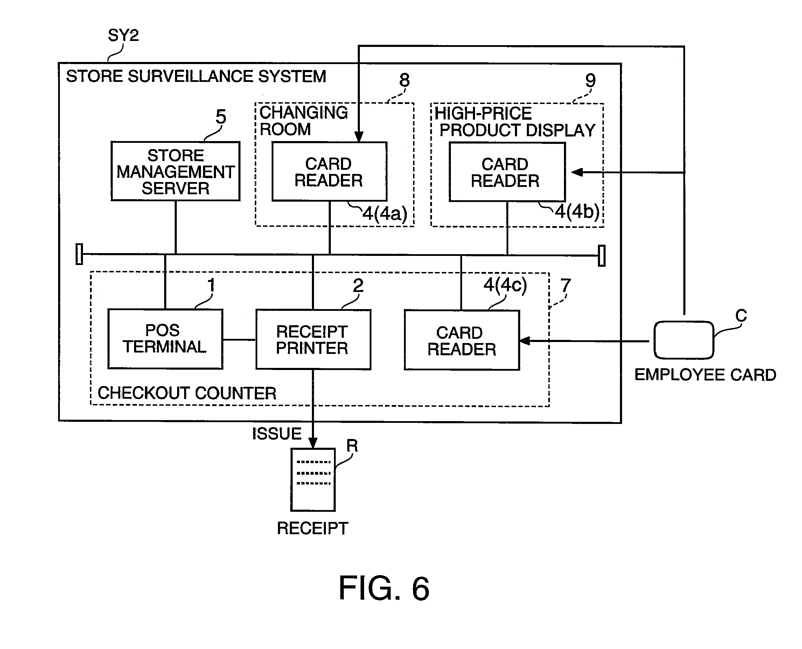

A store surveillance system SY2 according to the second embodiment of the invention is described next with reference to FIG. 6 to FIG. 12. The store surveillance system SY2 according to the second embodiment of the invention detects fraudulent activity triggered by employee activity (such as entering and leaving a specific area) in a store such as a retail store or supermarket.

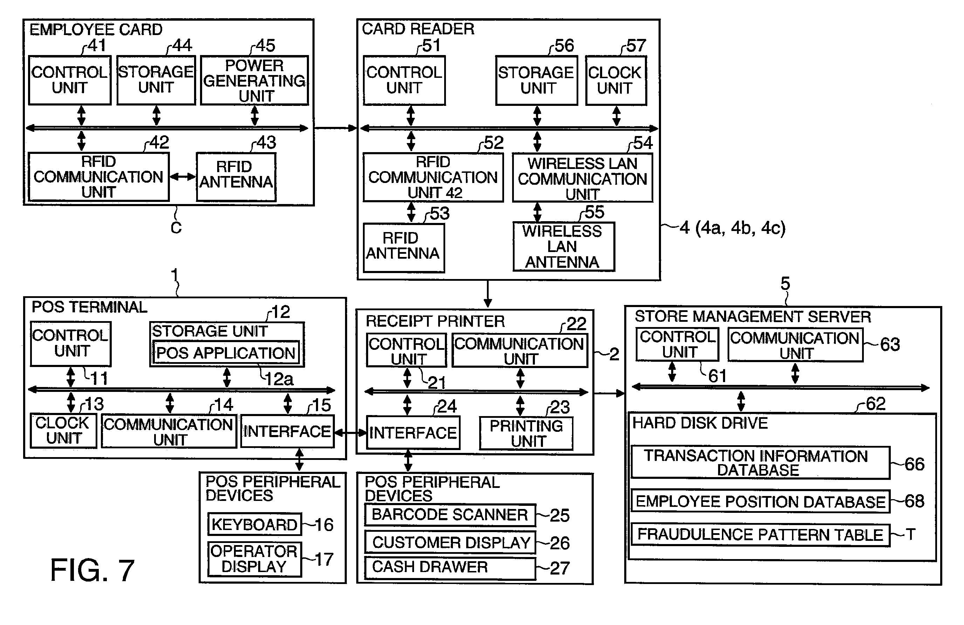

FIG. 6 is a block diagram showing the configuration of the store surveillance system SY2 according to the second embodiment of the invention. FIG. 7 is a control block diagram of the store surveillance system SY2 according to the second embodiment of the invention. As shown in FIG. 6 and FIG. 7, the store surveillance system SY2 according to the second embodiment of the invention differs from the first embodiment in having a plurality of card readers 4 (an example having three card readers 4a, 4b, 4c is shown in FIG. 6 and FIG. 7), not having a n employee surveillance camera 3, and not having the image processing program 65 and employee image database 67 on the store management server 5. Other aspects of this embodiment are the same as in the first embodiment as described above.

In FIG. 6 and FIG. 7 parts that are the same as in the first embodiment are identified by the same reference numerals used in FIG. 1 and FIG. 2, and further description thereof is omitted. Variations of parts that are applicable to the same components in the first embodiment can also be applied in this embodiment. Primarily the differences between the embodiments are described below.

In this embodiment of the invention a card reader 4 is installed at the checkout counter 7 (near the POS terminal 1), in each changing room 8, and where high-priced products are displayed (high-price product display 9). By reading the employee card C at each card reader 4 (4a to 4c), employee entry to a particular area or spending time in an area can be detected. Furthermore, while a card reader 4 is installed in three locations in this second embodiment of the invention, this is for illustration only and but the invention is not so limited.

The store management server 5 detects fraudulent activity by employees, and triggered by employee actions (entering a changing room 8, stopping at a high-price product display 9, or entering a checkout counter 7) detects if the employee engaged in fraudulent or improper activity (a fraudulent transaction) (or whether there is suspicion of fraudulent activity) based on the content of transaction processes (particularly exception processes) executed before and after the trigger event, and if fraudulent activity is detected issues a warning to that effect.

This detection of employee activity is based on the result of reading the employee card C (employee ID) by the card readers 4. More specifically, the store management server 5 detects where the employee is by receiving employee position information from a card reader 4. Based on any of these triggers, whether there was fraudulent activity by the employee is determined if the employee movements (where the employee is or was), the product transactions (transaction process content) executed before and after, and the customer conditions and in-store conditions match a fraudulence pattern in the fraudulence pattern table T. If fraudulent activity is detected (suspicion of fraudulent activity), a warning to that effect is issued. Fraudulent activity can thus be efficiently detected based on the specific action of the employee entering or lingering in or near an area (such as a changing room 8, high-price product display 9, or checkout counter 7) that the employee is likely to enter while involved in a fraudulent activity or after a fraudulent activity.

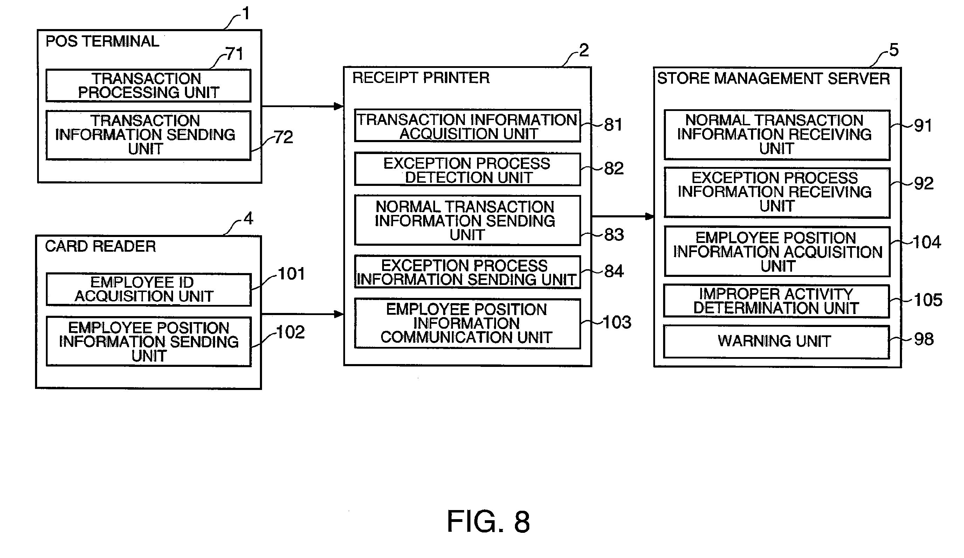

The functions of particular components of the store surveillance system SY2 are described below with reference to the function block diagram in FIG. 8.

The card reader 4 has an employee ID acquisition unit 101 and an employee position information sending unit 102.
The employee ID acquisition unit 101 is rendered by the three card readers 4a, 4b, 4c, and reads the employee card C and acquires the employee ID of each employee entering (or remaining in) the corresponding areas, that is, the changing room 8, high-price product display 9, and checkout counter 7.
The employee position information sending unit 102 sends the employee ID acquired by the employee ID acquisition unit 101 from the card readers 4a, 4b, 4c, the acquisition date and time that the employee ID was acquired, and the device ID as employee position information to the receipt printer 2.

The receipt printer 2 has a transaction information acquisition unit 81, exception process detection unit 82, normal transaction information sending unit 83, exception process information sending unit 84, and employee position information communication unit 103.
The employee position information communication unit 103 receives and sends employee position information acquired in each area (changing room 8, high-price product display 9, checkout counter 7) from the employee position information sending unit 102 to the store management server 5.

The store management server 5 has a normal transaction information receiving unit 91, exception process information receiving unit 92, employee position information acquisition unit 104, improper activity determination unit 105, and warning unit 98.
The employee position information acquisition unit 104 receives the employee position information acquired in each area (changing room 8, high-price product display 9, checkout counter 7) from the employee position information communication unit 103, and sends the received employee position information the employee position database 68.

The improper activity determination unit 105 compares the transaction information stored in the transaction information database 66 (normal process information and exception process information (type of exception process)), and the employee position information (the employee position detected in each area) stored in the employee position database 68, with the fraudulence pattern table T, and determines if there was any fraudulent activity. If this comparison finds a match with a fraudulence pattern stored in the fraudulence pattern table T, the improper activity determination unit 105 determines there was fraudulent activity.

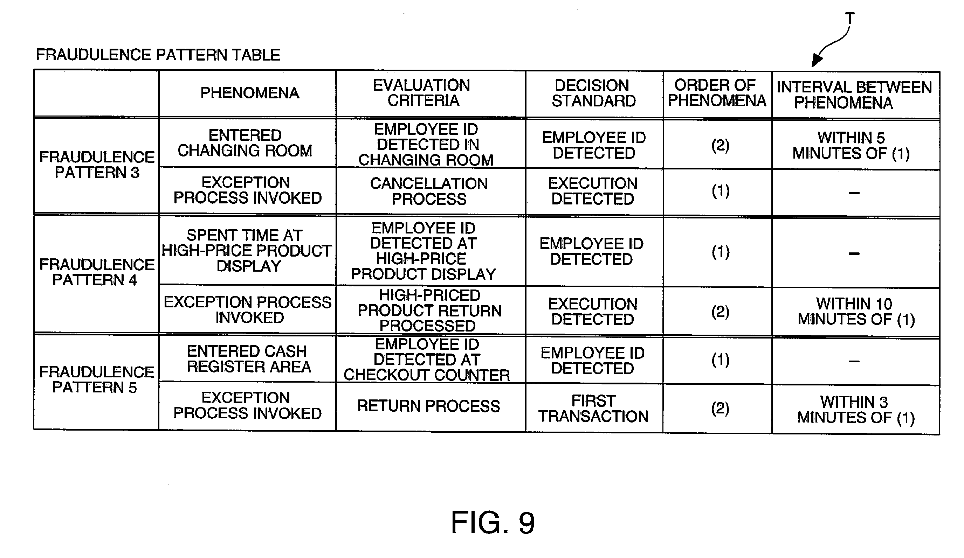

The configuration of this fraudulence pattern table T is described next with reference to FIG. 9.
As an example of fraudulence patterns stored in the fraudulence pattern table T, FIG. 9 shows a fraudulence pattern for detecting fraudulent activity during an exception process based on the pattern of employee movement. Note that this table describes a fraudulence pattern 3 as an example of fraudulent activity when an employee enters a changing room 8, a fraudulence pattern 4 as a fraudulence pattern anticipating the employee loitering near a high-price product display 9, and a fraudulence pattern 5 as a fraudulence pattern anticipating an employee going behind a checkout counter 7.

Fraudulence pattern 3 is a pattern for determining fraudulent or improper activity occurred (more specifically that there is a suspicion of fraudulent or improper activity) when the employee enters a changing room 8 within 5 minutes after a cancellation process.
Fraudulence pattern 4 is a pattern for determining fraudulent or improper activity occurred (more specifically that there is a suspicion of fraudulent or improper activity) when the employee is around a high-price product display 9 for a predetermined time and then within 10 minutes executes a return process for a high-priced product.
Fraudulence pattern 5 is a pattern for determining fraudulent or improper activity occurred (more specifically that there is a suspicion of fraudulent or improper activity) when the first transaction processed within 3 minutes after the employee enters the checkout counter 7 is a process for making change (a "repayment process").
These fraudulence patterns (fraudulence patterns 3 to 5 in FIG. 9) enable detecting, for example, fraudulent activity such as an employee hiding money pocketed in an exception process in her own purse or wallet in the changing room 8; fraudulent activity such as an employee taking a high-priced product, executing a return process on that product, and then pocketing money from the register; and fraudulent activity such as executing a repayment process when there is no one near the register and pocketing money from the register.

Note that fraudulence patterns 3 to 5 shown in the figure are examples only, and the invention is not limited thereto. For example, fraudulence patterns that anticipate other types of employee behavior (such as hand or head movements or up and down movement of the body) can also be created, and fraudulence patterns that anticipate customer behavior (such as whether or not a customer is in front of the checkout counter 7 or customer actions) and conditions in the store when an exception process is invoked, or that consider the status of the POS terminal 1 or POS peripheral devices (such as the read status of the barcode scanner 25 or whether the cash drawer 27 is open or closed) can be created.

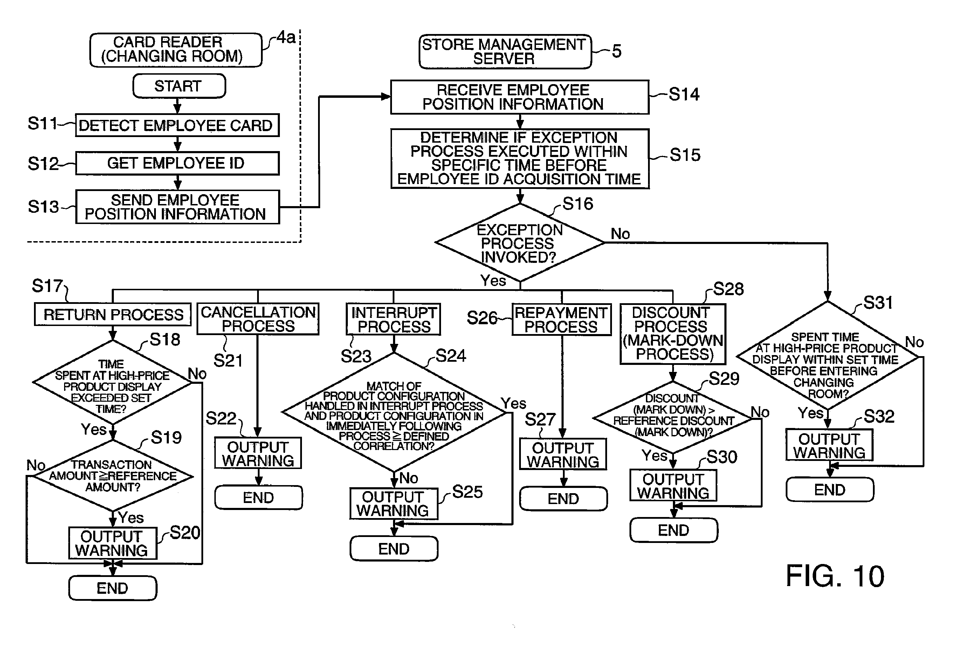

The procedure whereby the store management server 5 detects fraudulent activity is described next with reference to the flow charts in FIG. 10 to FIG. 12. Note that the flow charts in FIG. 10 to FIG. 12 describe an example in which fraudulent activity is detected by determining if the employee executed an exception process before or after a specific employee action is detected, but the invention is not so limited. For example, fraudulent activity can be detected by determining if a transaction process (normal transaction process) is executed before or after a specific employee action is detected.

FIG. 10 is a flow chart for detecting fraudulent activity triggered by the employee entering a changing room 8. In this example the suspected employee is employee A, and the employee ID of the employee card C carried by employee A is employee ID (A).
When employee A enters a changing room 8 (or approaches the changing room 8), the card reader 4a detects the employee card C of the employee A (S11), and reads the employee card C to get the employee ID (A) from the employee card C (S12). Next, the card reader 4a sends employee position information containing the acquired employee ID (A), the employee ID (A) acquisition time (current time), and the device ID of the card reader 4a to the store management server 5 (S13).

After receiving the employee position information (S14), the store management server 5 references the transaction information database 66 to check if an exception process (transaction process) was executed by the employee A within a specified time before the acquisition time of the employee ID (A) (such as during the preceding 5 minutes, that is, within 5 minutes before the employee A entered the changing room 8) (S15). This can be determined by comparing the employee ID that identifies the employee that executed the transaction process and is contained in the transaction information with the received employee ID (A). If a corresponding exception process is found (S16 returns Yes), the store management server 5 executes steps S17 to S30 described below according to the type of exception process that was detected.

If the exception process was a return process (S17), the store management server 5 determines if during a specified time before the return process (such as 10 minutes before the return process) the employee A stopped and remained at a high-price product display 9 for at least a specified time. This can be determined from the time that the employee ID (A) of employee A was detected by the 4b at the high-price product display 9.

If the employee A was not at the high-price product display 9 for the specified time or longer (S18 returns No), the store management server 5 determines there is no need to output a warning and ends the process.
However, if the employee A was at the high-price product display 9 for the specified time or longer (S18 returns Yes), the store management server 5 determines if the transaction amount of the return process is greater than or equal to a predetermined reference amount (such as 5000 yen or more).

If the result is that the cancelled amount is greater than or equal to the reference amount (cancelled amount ≧ reference amount, S19 returns Yes), the store management server 5 determines there was fraudulent activity by employee A (there is a suspicion of fraudulent activity), and sends a report to the administrator (for example, "there is a suspicion of a fraudulent return process") (S20).
However, if the result is that the cancelled amount is less than the reference amount (cancelled amount < reference amount, S19 returns No), the store management server 5 determines there is no need for a warning, and ends the process.

If the exception process detected in S16 is a cancellation process (S21) is described next. In this situation, the management server 5 determines there was fraudulent activity by employee A (there is a suspicion of fraudulent activity) (a determination equivalent to fraudulence pattern 3 in FIG. 9) and sends a warning to the administrator (for example, "there is suspicion of an improper cancellation process") (S22).

If the exception process detected in S16 is an interrupt process (S23) is described next. In this situation, the store management server 5 references the transaction information database 66, and compares the product configuration of the transaction in the interrupt process with the product configuration of the transaction immediately after the interrupt process. If the coincidence of the product configurations is less than a predetermined ratio (for example, 80% or less) (S24 returns No), the store management server 5 determines there was fraudulent activity by employee A (there is a suspicion of fraudulent activity), and outputs a warning to the administrator (for example, "there is suspicion of a fraudulent interrupt process") (S25). However, if the coincidence of the product configurations is greater than or equal to than a predetermined ratio (for example, 80% or more) (S24 returns Yes), the store management server 5 determines a warning is not necessary and ends the process.

If the exception process detected in S16 is a repayment process (S26) is described next. In this situation, the management server 5 determines there was fraudulent activity by employee A (there is a suspicion of fraudulent activity) and outputs a warning to the administrator (for example, "there is a suspicion of a fraudulent repayment process") (S27).

If the exception process detected in S16 is a discount process (or mark-down process) (S28) is described next. In this situation the store management server 5 determines if the discount rate (mark-down rate) exceeds a predetermined reference discount rate (reference mark-down rate, for example, 30%). If the discount rate (mark-down rate) exceeds the reference discount rate (reference mark-down rate) (S29 returns Yes; discount rate (mark-down rate) > reference discount rate (reference mark-down rate)), the store management server 5 determines there was fraudulent activity by employee A (there is a suspicion of fraudulent activity) and outputs a warning to the administrator (for example, "there is suspicion of a fraudulent discount (fraudulent mark-down)" (S30). However, if equal to or less than the reference discount rate (reference mark-down rate) (S29 returns No; discount rate (mark-down rate) ≦ reference discount rate (reference mark-down rate)), the store management server 5 determines a warning is not necessary and ends the process.

If an exception process is not detected in S16 (S16 returns No), the store management server 5 determines if the employee A was around a high-price product display 9 within a specified time before entering the changing room 8 (such as in the 5 minutes before entering the changing room 8). If the employee A was at the high-price product display 9 (S31 returns Yes), the store management server 5 determines there was fraudulent activity by employee A (there is a suspicion of fraudulent activity) and issues a warning to the administrator (for example, "there is a possibility of theft") (S32). However, if the employee A did not stop at a high-price product display 9 (S31 returns No), the store management server 5 determines a warning is not necessary and ends the process.

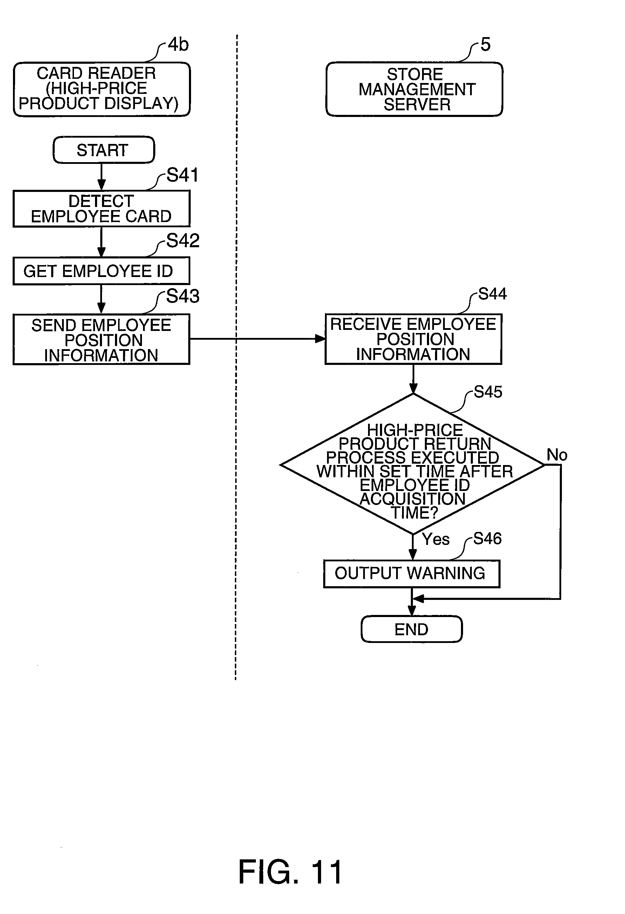

FIG. 11 is described next. FIG. 11 is a flow chart for detecting fraudulent activity triggered by an employee stopping at a high-price product display 9.
When an employee A stops at a high-price product display 9, the card reader 4b detects and reads the employee card C carried by the employee A (S41) to acquire the employee ID (A) from the employee card C (S42). If the card reader 4b then continues to detect the acquired employee ID (A) for a specified time or longer, it sends employee position information including the employee ID (A), the employee ID (A) acquisition time (current time), and its own device ID to the store management server 5 (S43).

The store management server 5 receives the employee position information (S44), references the transaction information database 66, and determines if employee A executed a return process for a high-priced product within a specified time from the employee ID (A) acquisition time (for example, within 10 minutes). If a return process was executed within the specified time (S45 returns Yes), the store management server 5 determines there was fraudulent activity by employee A (there is a suspicion of fraudulent activity)(a decision comparable to fraudulence pattern 4 in FIG. 9), and outputs a warning to the administrator (for example, "there is a suspicion of a fraudulent return process") (S46). If a return process was not executed within the specified time (S45 returns No), the store management server 5 determines a warning is not necessary and ends the process.

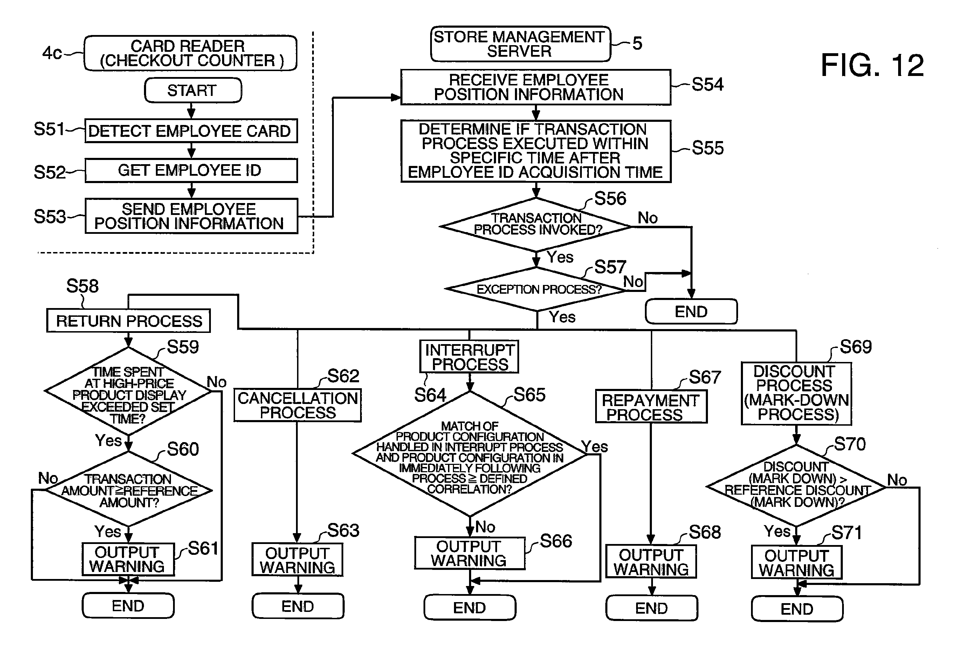

FIG. 12 is described next. FIG. 12 is a flow chart for detecting fraudulent activity triggered by the employee entering a checkout counter 7.
When employee A enters a checkout counter 7 the card reader 4c detects the employee card C of the employee A (S51), and reads the employee card C to get the employee ID (A) from the employee card C (S52). Next, the card reader 4c sends employee position information containing the acquired employee ID (A), the employee ID (A) acquisition time (current time), and the device ID of the card reader 4c to the store management server 5 (S53).

After receiving the employee position information (S54), the store management server 5 references the transaction information database 66 to check if a transaction process (cash register operation) was executed by the employee A within a specified time after the acquisition time of the employee ID (A) (such as within 3 minutes) (S55). If a corresponding exception process is not found (S56 returns No), the store management server 5 determines a warning is not necessary and ends the process.

However, if a transaction process is found (S56 returns Yes), the store management server 5 determines if the transaction process was an exception process. If the transaction process was not an exception process (S57 returns No), the store management server 5 determines a warning is not necessary and ends the process. However, if the transaction process was an exception process (S57 returns Yes), the store management server 5 executes steps S58 to S71 described below according to the type of exception process that was detected.

If the exception process was a return process (S58), the store management server 5 determines if during a specified time before the return process (such as 10 minutes before the return process) the employee A stopped and remained at a high-price product display 9 for at least a specified time.

If the employee A was not at the high-price product display 9 for the specified time or longer (S59 returns No), the store management server 5 determines there is no need to output a warning and ends the process.
However, if the employee A was at the high-price product display 9 for the specified time or longer (S59 returns Yes), the store management server 5 determines if the transaction amount of the return process is greater than or equal to a predetermined reference amount (such as 5000 yen or more).

If the result is that the cancelled amount is greater than or equal to the reference amount (cancelled amount ≧ reference amount, S60 returns Yes), the store management server 5 determines there was fraudulent activity by employee A (there is a suspicion of fraudulent activity), and sends a report to the administrator (for example, "there is a suspicion of a fraudulent return process") (S61).
However, if the result is that the cancelled amount is less than the reference amount (cancelled amount < reference amount, S60 returns No), the store management server 5 determines there is no need for a warning, and ends the process.

If the exception process detected in S57 is a cancellation process (S62) is described next. In this situation, the management server 5 determines there was fraudulent activity by employee A (there is a suspicion of fraudulent activity) and sends a warning to the administrator (for example, "there is suspicion of an improper cancellation process") (S63).

If the exception process detected in S57 is an interrupt process (S64) is described next. In this situation, the store management server 5 references the transaction information database 66, and compares the product configuration of the transaction in the interrupt process with the product configuration of the transaction immediately after the interrupt process. If the coincidence of the product configurations is less than a predetermined ratio (for example, 80% or less) (S65 returns No), the store management server 5 determines there was fraudulent activity by employee A (there is a suspicion of fraudulent activity), and outputs a warning to the administrator (for example, "there is suspicion of a fraudulent interrupt process") (S66).
However, if the coincidence of the product configurations is greater than or equal to than a predetermined ratio (for example, 80% or more) (S65 returns Yes), the store management server 5 determines a warning is not necessary and ends the process.

If the exception process detected in S57 is a repayment process (S67) is described next. In this situation, the management server 5 determines there was fraudulent activity by employee A (there is a suspicion of fraudulent activity) (a decision equivalent to fraudulence pattern 5 in FIG. 9) and outputs a warning to the administrator (for example, "there is a suspicion of a fraudulent repayment process") (S68).

If the exception process detected in S57 is a discount process (or mark-down process) (S69) is described next.
In this situation the store management server 5 determines if the discount rate (mark-down rate) exceeds a predetermined reference discount rate (reference mark-down rate, for example, 30%). If the discount rate (mark-down rate) exceeds the reference discount rate (reference mark-down rate) (S70 returns Yes; discount rate (mark-down rate) > reference discount rate (reference mark-down rate)), the store management server 5 determines there was fraudulent activity by employee A (there is a suspicion of fraudulent activity) and outputs a warning to the administrator (for example, "there is suspicion of a fraudulent discount (fraudulent mark-down)" (S71). However, if equal to or less than the reference discount rate (reference mark-down rate) (S70 returns No; discount rate (mark-down rate) reference discount rate (reference mark-down rate)), the store management server 5 determines a warning is not necessary and ends the process.

As described above, this second embodiment of the invention determines there is a suspicion of fraudulent activity (there was fraudulent activity by an employee) during the transaction process and issues a warning when the actions of an employee during a transaction process (before or after the transaction process is invoked) conform to predetermined specific actions.

More particularly, by using employee actions when executing an exception process (before or after an exception process is executed) that offers a particularly good opportunity for fraudulent activity as a trigger, fraudulent activity can be efficiently detected. Furthermore, by detecting fraudulent activity based on the chronological relationship of the employee action and exception process execution, fraudulent activity can be detected even more accurately.

Yet further, a configuration in which the various units rendered by the receipt printer 2 (including the transaction information acquisition unit 81, exception process detection unit 82, normal transaction information sending unit 83, exception process information sending unit 84, and employee position information communication unit 103) are rendered by the POS terminal 1 is also conceivable.

### * Embodiment 3

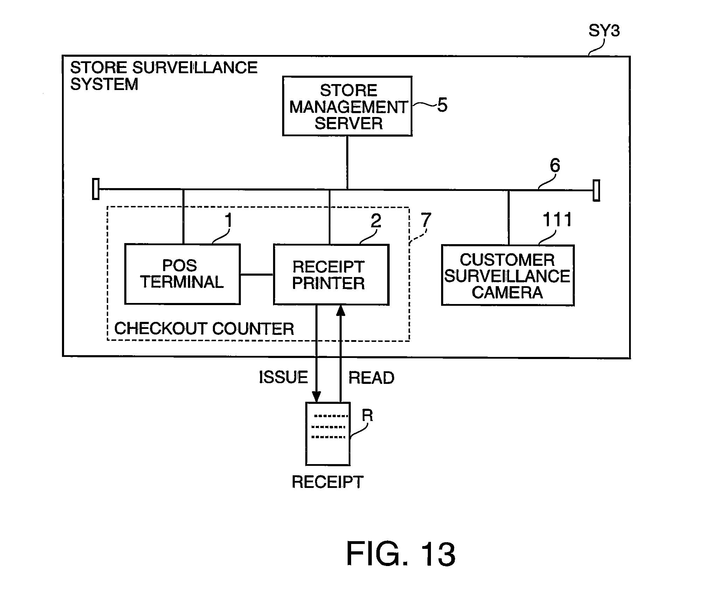

A store surveillance system SY3 according to a third embodiment of the invention is described next with reference to FIG. 13 to FIG. 18. The store surveillance system SY3 according to the third embodiment of the invention detects fraudulent activity by a customer.

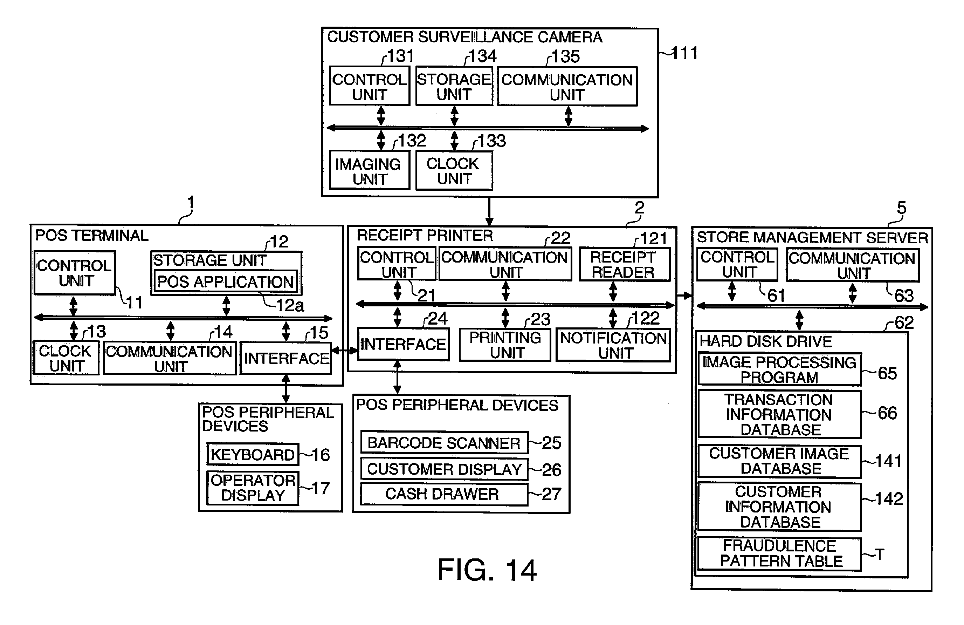

FIG. 13 is a block diagram describing the configuration of the store surveillance system SY3 according to the third embodiment of the invention. FIG. 14 is a control block diagram of the store surveillance system SY3 according to the third embodiment of the invention.
As shown in FIG. 13 and FIG. 14, the store surveillance system SY3 according to the third embodiment of the invention differs from the first embodiment in not having a card reader 4 and employee card C; having a customer surveillance camera 111 (factor surveillance unit, customer surveillance unit) that records customers instead of an employee surveillance camera 3; including a receipt reader 121 and notification unit 122 in the receipt printer 2; not having a employee position database 68, and having a customer image database 141 instead of a employee image database 67, and a customer information database 142 stored in the store management server 5. Other aspects of this embodiment are the same as in the first embodiment.

In FIG. 13 and FIG. 14 parts that are the same as in the first and second embodiments are identified by the same reference numerals used in FIG. 1 and FIG. 2, and in FIG. 6 and FIG. 7, and further description thereof is omitted. Variations of parts that are applicable to the same components in the first and second embodiments can also be applied in this embodiment. The following description focuses on the differences.

The customer surveillance camera 111 is located above (or beside) the checkout counter 7, and images customers during transaction processes. The customer image data (including date and time captured) captured by the customer surveillance camera 111 is sent with the camera ID identifying the customer surveillance camera 111 as customer image information through the receipt printer 2 to the store management server 5.
Note that the location of the customer surveillance camera 111 is not limited to above (or beside) the checkout counter 7, and the customer surveillance camera 111 may, for example, be installed near the customer display 26.

When printing a receipt R, the receipt printer 2 also prints information ("authentication information" herein) used for determining the authenticity of the receipt R with the transaction information. The receipt printer 2 also has a function for reading (scanning) the printed side of the issued receipt R.
Note that hidden characters (or a special print pattern) printed using invisible ink can conceivably be used as authentication information.

The store management server 5 detects fraudulent activity by customers, and more particularly determines if a customer did something fraudulent (if there is a suspicion of fraudulent activity) when an exception process is invoked (such as a product return process) based on, for example, the result of comparing the customer involved with the exception process with the customer (purchasing customer) that purchased the products used in the exception process, and the result of verifying the authenticity of the receipt R used in the exception process, and if fraudulent activity is detected issues a corresponding warning.

The control configuration of the store surveillance system SY3 components is described next with reference to the control block diagram of the store surveillance system SY3 in FIG. 14.

The receipt printer 2 includes a communication unit 22, printing unit 23, interface 24, receipt reader 121, notification unit 122, and a control unit 21 that is connected to these other units and controls the receipt printer 2.
The printing unit 23 prints print data generated based on the transaction information and authentication information on receipt paper. The authentication information is generated by the control unit 21 during the receipt printing process. The authentication information is different for each receipt R.
The receipt reader 121 reads the printed side of the issued receipt R.

The communication unit 22 communicates with the customer surveillance camera 111 and store management server 5 connected by the in-house LAN 6.
The control unit 21 controls the communication unit 22 and sends the customer image information received from the control unit 11 to the store management server 5. The control unit 21 also sends receipt information linking a unique number (receipt number) assigned to each receipt R to the authentication information printed on the same receipt R to the store management server 5. The control unit 21 also extracts the receipt information of the receipt R from the result of the receipt reader 121 reading the receipt R, and sends the receipt information to the store management server 5.

The notification unit 122 reports whether the receipt R read by the receipt reader 121 is a legitimate receipt or is a forged receipt that was created fraudulently, and may be rendered using an LED indicator or a buzzer, for example. If the former, a green LED may be turned on to indicate that the read receipt R is a legitimate receipt, and a red LED may be turned on if the receipt is counterfeit. If the latter, legitimate receipts and forged receipts can be indicated using different buzzer sounds.

The customer surveillance camera 111 includes an imaging unit 132, lock unit 133, storage unit 134, communication unit 135, and a control unit 131 that is connected to these and controls the customer surveillance camera 111.
This customer surveillance camera 111 differs from the employee surveillance camera 3 described in the first embodiment of the invention only in that it is used to capture customer image information. The components of the customer surveillance camera 111 (control unit 131, imaging unit 132, clock unit 133, storage unit 134, and communication unit 135) are therefore the same as the components of the employee surveillance camera 3 in the first embodiment of the invention (control unit 31, imaging unit 32, clock unit 33, storage unit 34, communication unit 35), and further description thereof is thus omitted.

The store management server 5 has the same general hardware configuration as a common personal computer, including a control unit 61, hard disk drive 62, and communication unit 63.
The communication unit 63 communicates with the receipt printer 2 connected to the in-house LAN 6.
The control unit 61 controls the communication unit 63 and receives transaction information (normal process information and exception process information), customer image information, and receipt information from the receipt printer 2.

The hard disk drive 62 stores a image processing program 65, a transaction information database 66, a customer image database 141, a customer information database 142 (captured image storage unit), and fraudulence pattern table T. The image processing program 65 analyzes customer image data to extract a color feature of the customer's clothing and a facial feature of the customer's face. These are collectively referred to as "customer features" below.

The customer image database 141 stores customer image information (camera ID and customer image data (time captured)).
The customer information database 142 stores the customer features (color feature and facial feature) of the customer at the time of product purchase linked to the receipt information (receipt number and authentication information) of the receipt R that was issued at the time of purchase.

With this configuration, the control unit 61 determines there was fraudulent activity by the customer if, when an exception process is invoked, the result of comparing the customer features of the customer involved with the exception process and the customer features stored in the customer information database 142, the result of determining the authenticity of the receipt R used in the exception process, employee actions, in-store conditions, and the product transaction conditions match a fraudulence pattern stored in the fraudulence pattern table T.
When fraudulent customer activity is detected, the control unit 61 issues a warning indicating that fraudulent activity was detected (that there is a suspicion of fraudulent activity).

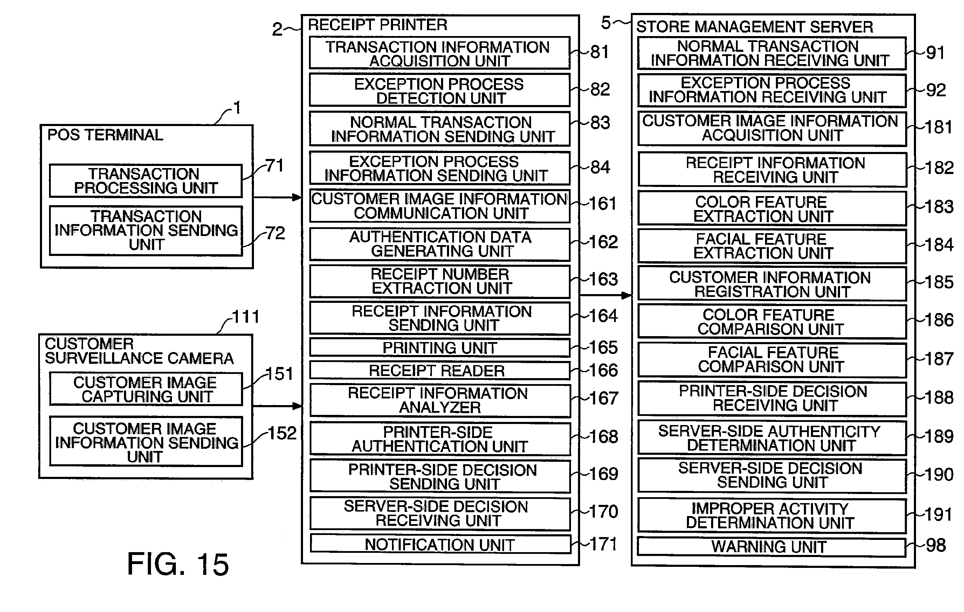

The functions of specific parts of the store surveillance system SY3 are described next with reference to the function block diagram in FIG. 15.

The customer surveillance camera 111 has a customer image capturing unit 151 (factor surveillance unit, imaging unit) and customer image information sending unit 152.
The customer image capturing unit 151 takes pictures of customers at the checkout counter 7.
The customer image information sending unit 152 sends the customer image data (time captured) taken by the customer image capturing unit 151 with its own camera ID as customer image information to the receipt printer 2.

The receipt printer 2 includes a transaction information acquisition unit 81, exception process detection unit 82, normal transaction information sending unit 83, exception process information sending unit 84, customer image information communication unit 161, authentication data generating unit 162, receipt number extraction unit 163, receipt information sending unit 164, printing unit 165, receipt reader 166, receipt information analyzer 167, printer-side authentication unit 168 (factor surveillance unit, evaluation of evidence unit), printer-side decision sending unit 169, server-side decision receiving unit 170 and notification unit 171.

The customer image information communication unit 161 receives and sends customer image information from the customer image information sending unit 152 to the store management server 5.
The authentication data generating unit 162 generates authentication information for printing on the receipt R.
The receipt number extraction unit 163 extracts the receipt number assigned to the receipt R from the print data printed on the receipt R.
The receipt information sending unit 164 sends the extracted receipt number and the authentication information printed on the receipt R of that receipt number as receipt information to the store management server 5.

The printing unit 165 prints the print data generated from the transaction information and authentication information on the receipt paper, and issues a receipt R.
The receipt reader 166 reads the printed side of the issued receipt R.
The receipt information analyzer 167 analyzes the receipt R content read by the receipt reader 166 and extracts the receipt information.

The printer-side authentication unit 168 determines if the authentication information is present in the receipt information extracted by the receipt information analyzer 167.
If the printer-side authentication unit 168 decides that the authentication information is present in the receipt information, the printer-side decision sending unit 169 sends the receipt information (authentication information and receipt number) to the store management server 5. If the authentication information is not present in the receipt information, the printer-side decision sending unit 169 sends information indicating that the receipt is a forged receipt ("forged receipt detection information" below) to the store management server 5.

The server-side decision receiving unit 170 receives the decision (authentication result information) sent by the server-side decision sending unit 190 of the store management server 5 described below.
The notification unit 171 reports detection of a forged receipt when the printer-side authentication unit 168 determines that the authentication information is not present. Based on the content of the authentication result information received by the server-side decision receiving unit 170, the notification unit 171 also reports detection of a legitimate receipt or a forged receipt.

The store management server 5 includes a normal transaction information receiving unit 91, exception process information receiving unit 92, customer image information acquisition unit 181, receipt information receiving unit 182, color feature extraction unit 183, facial feature extraction unit 184, customer information registration unit 185, color feature comparison unit 186, facial feature comparison unit 187, printer-side decision receiving unit 188, server-side authenticity determination unit 189 (factor surveillance unit, evaluation of evidence unit), server-side decision sending unit 190, improper activity determination unit 191, and warning unit 98.

The customer image information acquisition unit 181 receives and saves customer image information from the customer image information communication unit 161 in the customer image data base 141.
The receipt information receiving unit 182 receives receipt information from the receipt information sending unit 164 of the receipt printer 2.

The color feature extraction unit 183 analyzes the acquired customer image data (customer image information), and extracts a color feature of the customer's clothes.
More specifically, the frame difference and background difference are extracted from the customer image data, and an area where there is motion (motion area) is detected. The position of the customer's head is then detected in the motion area, and the color (color feature) of a part of clothing identified from the position of the head is extracted.

The facial feature extraction unit 184 analyzes the acquired customer image data (customer image information), and extracts a facial feature of the customer.
More specifically, the frame difference and background difference are extracted from the customer image data, and an area where there is motion (motion area) is detected. The customer's face is then detected in the motion area, and the image (facial part) is normalized. A facial feature is extracted based on this normalized image.

The customer information registration unit 185 records the customer features (extracted by the color feature extraction unit 183 and facial feature extraction unit 184) of the customer at the time of purchase linked to the receipt information (received by the receipt information receiving unit 182) at the time of product purchase in the customer information database 142.

The color feature comparison unit 186 determines if the same customer as the customer involved with the exception process is registered in the customer information database 142 (if there is the same customer) by comparing the color feature of the customer clothing in the exception process with the color feature stored in the customer information database 142.
The facial feature comparison unit 187 determines if the same customer as the customer involved with the exception process is registered in the customer information database 142 (if there is the same customer) by comparing the facial feature of the customer in the exception process with the facial feature stored in the customer information database 142.

The printer-side decision receiving unit 188 receives the receipt information or forged receipt detection information sent from the printer-side decision sending unit 169.
When receipt information is received by the printer-side decision receiving unit 188, the server-side authenticity determination unit 189 determines if receipt information matching the received receipt information is stored in the customer information database 142. If matching receipt information is stored in the customer information database 142, the server-side authenticity determination unit 189 determines that the receipt R read by the receipt printer 2 is a legitimate receipt, and if matching receipt information is not stored decides the receipt R is a forged receipt.
The server-side decision sending unit 190 sends the decision (authentication result information) of the server-side authenticity determination unit 189 to the receipt printer 2.

The improper activity determination unit 191 determines if there was fraudulent activity by comparing the exception process information (exception process type) acquired by the exception process information receiving unit 92, the result of customer comparison based on customer features (color feature and facial feature), and the authenticity determination of the receipt R read by the receipt printer 2 with the fraudulence pattern table T. If this comparison finds a corresponding fraudulence pattern in the fraudulence pattern table T, the improper activity determination unit 191 there was fraudulent activity.

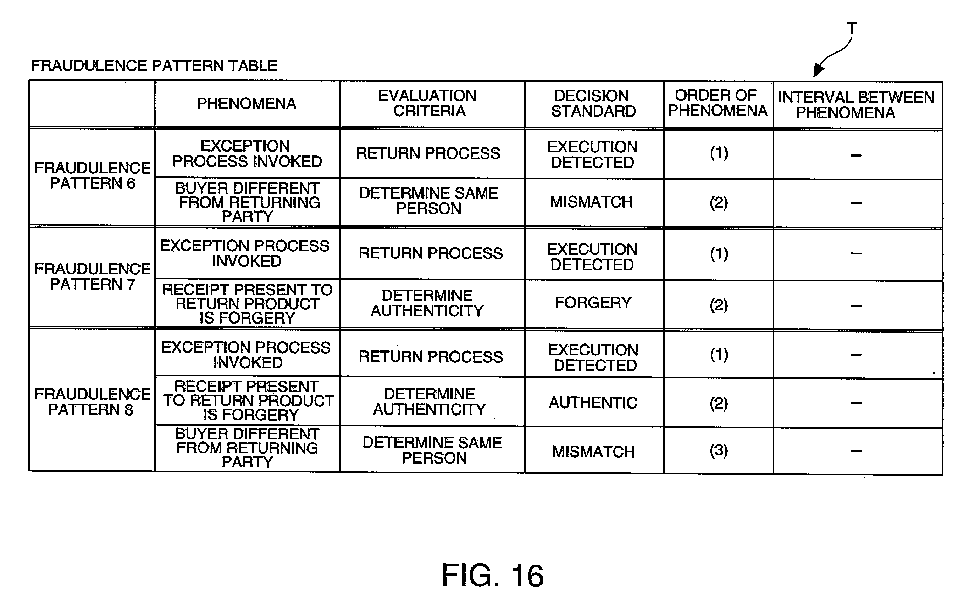

The configuration of the fraudulence pattern table T is described next with reference to FIG. 16. This example describes a fraudulence pattern table T having fraudulence pattern tables 6 to 8 for detecting fraudulent activity when a product is returned.

For example, fraudulence pattern 6 is a pattern for determining if there was fraudulent activity (there is a suspicion of fraudulent activity) when the return process is executed and the customer attempting to return a product ("product-returning customer") is different from the customer that purchased the product.
Fraudulence pattern 7 is a pattern for determining if there was fraudulent activity when the return process is executed, the authenticity of the receipt R presented as evidence of purchase is evaluated, and the receipt R is determined to be a forged receipt.
Fraudulence pattern 8 is a pattern for determining if there was fraudulent activity (there is a suspicion of fraudulent activity) when the return process is executed, the authenticity of the receipt R presented as evidence of purchase is evaluated and the receipt R is determined to be a legitimate receipt, but the product-returning customer and the customer that purchased the product are different.

Note that fraudulence patterns 6 to 8 shown in the figure are examples only, and the invention is not limited thereto. For example, fraudulence patterns that also anticipate employee behavior can also be created, and fraudulence patterns that anticipate customer behavior and conditions in the store during the exception process, or that consider the status of the POS terminal 1 or POS peripheral devices (such as the read status of the barcode scanner 25 or whether the cash drawer 27 is open or closed) can be created.
As a result, processes that determine there has been fraudulent activity when, for example, the customer returning a product and the customer that purchased the product are different, and the behavior of the employee when the product is returned is suspicious.
In addition, by creating a fraudulence pattern that considers the transaction amount, processes that determine there has been fraudulent activity when, for example, the customer returning a product and the customer that purchased the product are different, and the transaction amount exceeds a predetermined amount.

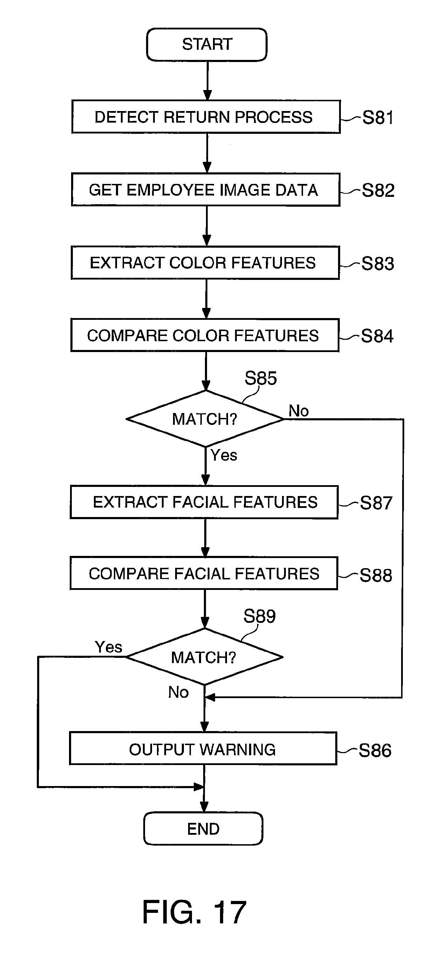

A process whereby the store management server 5 detects fraudulent activity is described below with reference to the flow chart in FIG. 17. Note that this process describes an example (the steps for evaluating fraudulence pattern 6) in which fraudulent activity is detected by detecting if the product-returning customer and the customer that actually purchased the product ("purchasing customer") are the same when the return process is executed as an exception process.

When the store management server 5 (control unit 61) detects a return process was started (S81), it gets customer image data for the customer returning the product (product-returning customer) (S82).
Next, the store management server 5 analyzes the acquired customer image data and extracts the color feature of the customer's clothing (S83).
The store management server 5 then compares the extracted color feature with the color feature values stored in the customer information database 142 (S84).
If a matching color feature value is not found (S85 returns No), the store management server 5 determines the product-returning customer and purchasing customer are not the same customer, that is, determines that a fraudulent return (fraudulent activity) was attempted by the product-returning customer (there is a suspicion of a fraudulent return) (corresponding to fraudulence pattern 6 in FIG. 16), and issues a warning to the administrator (for example, "there is a suspicion of a fraudulent return process") (S86).

However, if a matching color feature value is found (S85 returns Yes), the store management server 5 analyzes the customer image data acquired in S82 and extracts the customer facial feature (S87).
The store management server 5 then compares the facial feature related to the color feature in the data having the matching color feature in S84 with the extracted facial feature (S88).

If a matching facial feature is not found (S89 returns No), the store management server 5 determines the product-returning customer and the purchasing customer are not the same customer, that is, determines that a fraudulent return (fraudulent activity) was attempted by the product-returning customer (there is a suspicion of a fraudulent return) (corresponding to fraudulence pattern 6 in FIG. 16), and issues a warning to the administrator (for example, "there is a suspicion of a fraudulent return process") (S86).
However, if a matching facial feature value is found (S89 returns Yes), the store management server 5 determines the product-returning customer and the purchasing customer are the same customer, that is, that the return process is legitimate, determines a warning is not necessary and ends the process.

Individual customers can thus be accurately identified by comparison based on a customer's facial feature. In addition, by comparing a color feature before comparing the customer's facial features, the data to be compared can be reduced and comparison can be done efficiently even when there are many subject images to compare. Note that comparison based only on facial features is possible, and comparison based only on color features is possible. Yet further, if a facial feature comparison fails first, color features are then compared, and the color feature comparison passes, a warning can be determined to be unnecessary.

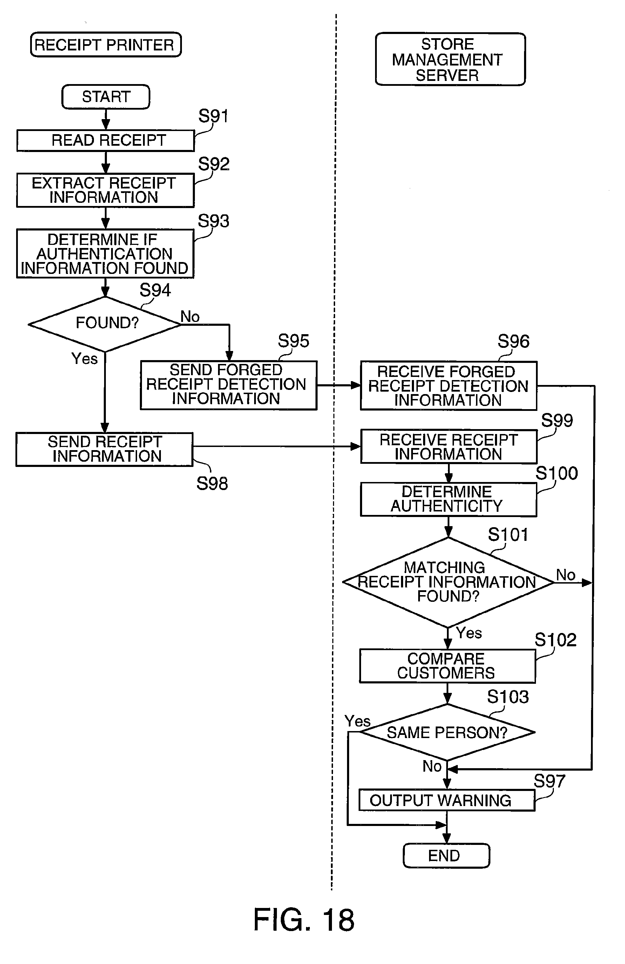

Referring next to the flow chart in FIG. 18, a process for detecting fraudulent activity (the steps for evaluating fraudulence pattern 7 or fraudulence pattern 8) by verifying the authenticity of the receipt R used to make a return when a return process is executed as the exception process is described below.

When an employee starts a return process and scans the receipt R used to make a return, the receipt printer 2 (control unit 21) reads the receipt R (S91). The receipt printer 2 then analyzes the content of the read receipt R and extracts the receipt information (S92).
The receipt printer 2 then checks if authentication information is contained in the extracted receipt information (S93).
If the authentication information is not in the extracted receipt information (S94 returns No), the receipt printer 2 determines the scanned receipt R is a forged receipt and sends forged receipt detection information to the store management server 5 (S95). In this situation the receipt printer 2 also reports that a forged receipt was detected using its own notification unit 122 (for example, by turning a red LED indicator on).

The store management server 5 that received this forged receipt detection information (S96) then determines that there was a fraudulent return (fraudulent activity) by the customer (product-returning customer) using a forged receipt to return a product (corresponding to fraudulence pattern 7 in FIG. 16), and issues a warning to the administrator (for example, "fraudulent return process detected") (S97).

If the authentication information was detected in the extracted receipt information (S94 returns Yes), the receipt printer 2 sends the receipt information extracted in S92 to the store management server 5 (S98). The store management server 5 receives the receipt information (S99), references the customer information database 142, and determines if receipt information matching the received receipt information is stored. That is, the store management server 5 determines the authenticity of the receipt R (S100).

If matching receipt information is not found (S101 returns No), the store management server 5 determines the receipt R scanned by the receipt printer 2 is a forged receipt.
As a result, the store management server 5 determines that there was a fraudulent return (fraudulent activity) by the customer (product-returning customer) using a forged receipt to return a product (corresponding to fraudulence pattern 7 in FIG. 16), and issues a warning to the administrator (for example, "fraudulent return process detected") (S97).

If matching receipt information is found (S101 returns Yes), the store management server 5 determines the receipt R scanned by the receipt printer 2 is a legitimate receipt.
The store management server 5 then determines if the product-returning customer and the purchasing customer are the same customer (S102). Whether they are the same customer can be determined by comparing the customer features of the product-returning customer with the customer features linked to the receipt information (receipt number).

If the product-returning customer and the purchasing customer are the same customer (S103 returns Yes), the store management server 5 determines there is no need for a warning (the return process is legitimate) and ends the process.
However, if the product-returning customer and the purchasing customer are not the same customer (S103 returns No), the store management server 5 determines there was a fraudulent return (there is a suspicion of fraudulent activity) by the customer (product-returning customer) (corresponding to fraudulence pattern 8 in FIG. 16), and outputs a warning to the administrator (for example, "there is a suspicion of a fraudulent return process") (S97). This enables detecting fraudulent activity such as using a forged receipt to return product purchased at a different store (particularly a store where the price is lower). In addition, exception processes such as using a fraudulently obtained legitimate receipt to return product can also be prevented.

Note that the authentication result information from S100 is sent from the store management server 5 to the receipt printer 2, and the receipt printer 2 reports whether the scanned receipt R is a legitimate receipt or a forged receipt based on the received authentication result information. In addition, the comparison using customer features in S102 may use only the facial features or only color features. Further alternatively, a combination of both may be used.

As described above, the third embodiment of the invention issues a warning when the customer initiating the exception process and the customer that purchased the product returned in the exception process are determined to be not the same person. As a result, whether the exception process was initiated by the correct buyer (the person that purchased the product in the store) can be easily determined. For example, when a customer attempts fraudulent activity such as fraudulently returning stolen goods or goods purchased for less at a different store, this can be detected and store losses caused by such fraudulent customer actions can be reduced.

Furthermore, the third embodiment of the invention prints authentication information on the receipt R when a receipt R is issued in the third embodiment of the invention, and can more reliably detect forged receipts R by determining if the presented receipt is a legitimate receipt or forged receipt based on the authentication information (whether authentication information is present or comparing the content of the authentication information) when determining the authenticity of a receipt R presented in the exception process (such as a return process).

The first to third embodiments of the invention monitor the situations in which events occur in a store (for example, when a transaction process (including exception processes) executes), automatically determine from the surveillance results if there was any fraudulent activity in a particular situation, and can issue a warning when fraudulent activity is detected.

More particularly, fraudulent activity can be accurately detected by monitoring a combination of factors, such as the actions and behavior of employees (employee status), customer status, the status of devices used in transaction processes (such as the status of the POS terminal 1 and peripheral devices), and the authenticity of receipts R and products presented for return, according to particular events (event characteristics) in order to determine (monitor) the conditions under which events occur. In addition, in order to determine (monitor) the conditions under which events occur, fraudulent activity can be determined based only on customer attributes, and fraudulence can be determined based only on the status of the transaction process device, regardless of employee actions and behavior.

The steps of the control methods (the steps in the flow charts described in the foregoing embodiments) of the store surveillance systems SY1 to SY3 according to the foregoing embodiments can also be rendered as a computer-executable program. This program can also be provided stored on a recording medium (not shown in the figure). Examples of such recording media include CD-ROM, flash ROM, memory cards (Compact Flash (R), smart media, memory sticks, for example), Compact Discs, magneto-optical discs, Digital Versatile Discs, and floppy disks.

Note, further, that the invention is not limited to the device configurations and process steps of the store surveillance systems SY1 to SY3 described above, and can be varied in many ways without departing from the scope of the accompanying claims.
Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.
Specifically, features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A warning device for a store surveillance system, comprising:
a pattern storage unit (T) for storing occurrence patterns of specific events that occur in a store;
a factor surveillance unit (3, 4; 111; 151; 168; 189) that monitors component factors of the occurrence patterns; and
a warning unit (61, 63; 98) for issuing, when a transaction process unit (11, 12a) of the store surveillance system executes a predetermined exception process, a warning conditionally upon whether event occurrence conditions detected by the factor surveillance unit (3, 4; 111; 151; 168; 189) match a fraudulence pattern stored as an occurrence pattern in the pattern storage unit (T), or do not match a normal pattern stored as an occurrence pattern in the pattern storage unit (T).

2. The warning device described in claim 1, wherein:
the factor surveillance unit (3, 4; 111; 151; 168; 189) comprises at least one of
an employee surveillance unit (3, 4) for monitoring employee actions and behavior,
a customer surveillance unit (111) for monitoring customer behavior during the transaction process,
a transaction process device surveillance unit (1, 2; 11, 21) for monitoring a status of a device used to execute the transaction process, in particular for monitoring a status of the transaction process unit (11, 12a) of the store surveillance system, and
an evaluation of evidence unit (168; 189) for determining the authenticity of a returned product or a receipt presented as evidence in the exception process.

3. The warning device described in claim 1 or 2, wherein:
the exception process includes at least one of
an interrupt process for canceling input data during the transaction process,
a cancellation process for canceling the transaction process after the transaction process ends,
a return process for returning a product,
a mark-down process for reducing a product price,
a discount process for discounting a product,
a change-making process for making change,
a payment/repayment process for recording a payment or accepting a repayment, and
a re-issue process for re-issuing a receipt.

4. The warning device described in at least one of claims 1 to 3, wherein:
the warning unit (61, 63; 98) is configured to issue a warning based on whether or not the transaction amount in the exception process is greater than or equal to a predetermined specified amount.

5. The warning device described in at least one of claims 1 to 4, wherein:
the warning unit (61, 63; 98) is configured to issue a warning to a specific administrator as one warning method.

6. The warning device described in at least one of claims 1 to 5, wherein:
the factor surveillance unit (3, 4; 111; 151; 168; 189) comprises
an imaging unit (32; 132; 151) for recording customers during the transaction process of the transaction process unit,
a captured image storage unit (142) for storing a captured image output from the imaging unit (32; 132; 151), and
a comparison unit (186; 187) for comparing, when the transaction process unit (11, 12a) executes a specific exception process and the customer is recorded during the exception process by the imaging unit (32; 132; 151), the captured image of the customer during the exception process with the captured image of the customer that purchased the target product of the exception process read from the captured image storage unit (142); and
when the result of comparison by the comparison unit (186; 187) is that the customer in the exception process and the customer at the time of purchase are not the same person, the warning unit (61, 63; 98) is configured to determine the event occurrence conditions match a fraudulence pattern stored in the pattern storage unit (T) and issues a warning.

7. The warning device described in claim 6, wherein:
the comparison unit (186; 187) is configured to compare the captured image of the customer based on at least one of a facial feature of the customer and a color feature of the customer's clothing.

8. The warning device described in claim 6 or 7, wherein:
the captured image storage unit (142) is configured to store information based on a captured image of the customer during the transaction process linked to receipt information of the receipt issued in the transaction process, and comprises
a receipt reading unit (121) for reading the receipt information during the exception process, and
an authentication unit (168) for comparing the read receipt information with the receipt information stored in the captured image storage unit (142), and determining the authenticity of the read receipt; and
the comparison unit (186; 187) is configured to compare the captured customer images if the result of the authentication unit (168) is that the read receipt is not a forged receipt.

9. The warning device described in claim 8, wherein:
authentication information for verifying authenticity is printed on the receipt; and
the receipt information includes the authentication information.

10. The warning device described in at least one of claims 1 to 9, wherein:
the pattern storage unit (T) is configured to store fraudulent behavior patterns describing employee behaviors that are considered to be fraudulent activity by an employee around a checkout counter as the fraudulence patterns;
the factor surveillance unit (3, 4; 111; 151; 168; 189) comprises a behavior detection unit (3, 4) for detecting employee behavior around the checkout counter; and
the warning unit (61, 63; 98) is configured to issue a warning when employee behavior detected by the behavior detection unit (3, 4) is determined to match a fraudulent behavior pattern stored in the pattern storage unit (T).

11. The warning device described in claim 10, further comprising:
a transaction information acquisition unit (81) for acquiring transaction information, which is the result of a transaction process of the transaction process unit (11, 12a) disposed at the checkout counter;
wherein the warning unit (61, 63; 98) is configured to issue a warning when specific information denoting an exception process of the transaction process is contained in the transaction information, and the employee behavior during the exception process detected by the behavior detection unit (3, 4) is determined to match a fraudulent behavior pattern.

12. The warning device described in claim 10 or 11, wherein:
the behavior detection unit (3, 4) is configured to detect employee behavior from captured images of employees taken around the checkout counter.

13. The warning device described in at least one of claims 10 to 12, wherein:
the employee carries an IC card (C) to which an ID identifying the employee is assigned; and
the behavior detection unit (3, 4) is configured to detect employee behavior based on reading the IC card (C).

14. A store surveillance system comprising:
the warning device described in at least one of claims 1 to 13, and
a transaction process unit (11, 12a) for executing a transaction process, in particular a product transaction process.

15. A control method for controlling a warning device for a store surveillance system that comprises a pattern storage unit (T) for storing occurrence patterns of specific events that occur in a store, the warning device being configured to identify fraudulent activity in the store based on the occurrence patterns, the control method including as steps executed by a computer:
a transaction process step of executing a transaction process, in particular a product transaction process;
a factor surveillance step of monitoring component factors of the occurrence patterns; and
a warning step of issuing, when the transaction process step executes a predetermined exception process, a warning conditionally upon whether event occurrence conditions detected by the factor surveillance step match a fraudulence pattern stored as an occurrence pattern, or do not match a normal pattern stored as an occurrence pattern.

16. The control method described in claim 15, wherein:
the factor surveillance step comprises at least one of
an employee surveillance step of monitoring employee actions and behavior,
a customer surveillance step of monitoring customer behavior during the transaction process,
a transaction process device surveillance step of monitoring a status of a device used to execute the transaction process, in particular of a transaction process unit (11, 12a) of the store surveillance system, and
an evaluation of evidence step of determining the authenticity of a returned product or a receipt presented as evidence in the exception process.

17. The control method described in claim 15 or 16, wherein:
the exception process comprises at least one of
an interrupt process for canceling input data during the transaction process,
a cancellation process for canceling the transaction process after the transaction process ends,
a return process for returning a product,
a mark-down process for reducing a product price,
a discount process for discounting a product,
a change-making process for making change,
a payment/repayment process for recording a payment or accepting a repayment, and
a re-issue process for re-issuing a receipt.

18. The control method described in at least one of claims 15 to 17, wherein:
in the warning step, a warning is issued based on whether or not the transaction amount in the exception process is greater than or equal to a predetermined specified amount.

19. The control method described in at least one of claims 15 to 18, wherein:
the factor surveillance step includes an imaging step of recording customers during the transaction process of the transaction process unit; and
the method further comprises
a captured image storage step of storing a captured image output from the imaging step,
and
a comparison step of comparing, when the transaction process step executes a specific exception process is executed in the transaction process step the customer is recorded during the exception process in the imaging step, the captured image of the customer during the exception process with the captured image of the customer that purchased the target product of the exception process and was stored in the captured image storage step; and
when the result of comparison by the comparison step is that the customer in the exception process and the customer at the time of purchase are not the same person, it is determined in the warning step that the event occurrence conditions match a fraudulence pattern stored in the pattern storage unit and a warning is issued in the warning step.

20. The control method described in at least one of claims 15 to 19, wherein:
the pattern storage unit (T) is configured stores fraudulent behavior patterns describing employee behaviors that are considered to be fraudulent activity by an employee around a checkout counter as the fraudulence patterns;
the factor surveillance step includes a behavior detection step of detecting employee behavior around the checkout counter; and
a warning is issued in the warning step when employee behavior detected in the behavior detection step is determined to match a fraudulent behavior pattern stored in the pattern storage unit (T).

21. A computer program product comprising computer program means being configured to cause a computer to execute the steps of the method for controlling a warning device for a store surveillance system described in at least one of claims 15 to 20.
